(19) Europäisches Patentamt
European Patent Office
Office européen des brevets

(11) **EP 4 435 518 A2**

(12) **EUROPEAN PATENT APPLICATION**

(43) Date of publication:
**25.09.2024 Bulletin 2024/39**

(21) Application number: **23187280.5**

(22) Date of filing: **24.07.2023**

(51) International Patent Classification (IPC):
**G03G 5/00** *(2006.01)* **C08F 220/00** *(2006.01)*
**G03G 9/087** *(2006.01)*

(52) Cooperative Patent Classification (CPC):
**G03G 9/08711; G03G 9/08755; G03G 9/08795; G03G 9/08797**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **24.03.2023 JP 2023048933**

(71) Applicant: **FUJIFILM Business Innovation Corp.**
**Minato-ku**
**Tokyo (JP)**

(72) Inventors:
• **ISHIZUKA, Daisuke**
  **Minamiashigara-shi, Kanagawa (JP)**
• **FURUTA, Tsutomu**
  **Minamiashigara-shi, Kanagawa (JP)**
• **SAITO, Erina**
  **Minamiashigara-shi, Kanagawa (JP)**
• **NAKAJIMA, Tomohito**
  **Minamiashigara-shi, Kanagawa (JP)**

(74) Representative: **Kurig, Thomas**
**Becker Kurig & Partner**
**Patentanwälte mbB**
**Bavariastraße 7**
**80336 München (DE)**

(54) **ELECTROSTATIC CHARGE IMAGE DEVELOPING TONER**

(57) An electrostatic charge image developing toner contains a binder resin and resin particles, in which the binder resin includes an amorphous resin and a crystalline resin, the resin particles contain a styrene-(meth)acrylate-based copolymer, in a case where a glass transition temperature obtained by Fox equation from a ratio of constituent monomers in the entire resin particles is defined as Tg(C1)°C and a glass transition temperature actually measured with a differential scanning calorimeter is defined as Tg(E)°C, $5.0 \leq Tg(E) - Tg(C1) \leq 20.0$, and in a case where a glass transition temperature obtained by Fox equation using a ratio of constituent monomers, calculated from a surface analysis of the resin particles, is defined as Tg(C2)°C, $Tg(C1) > Tg(C2)$.

EP 4 435 518 A2

**Description**

BACKGROUND OF THE INVENTION

(i) Field of the Invention

The present invention relates to an electrostatic charge image developing toner.

(ii) Description of Related Art

JP2011-34013A discloses a toner containing a binder resin having a first functional group, organic fine particles having a second functional group on a surface, and a colorant, in which the first functional group and the second functional group are crosslinked, the organic fine particles have a crosslinked structure that crosslinks resins constituting the organic fine particles, and a designed glass transition temperature is 20°C or lower.

JP2005-91704A discloses resin particles for a toner, that is used in a production of a toner obtained by granulating at least one or more resin particles and colorant particles in an aqueous medium, in which at least one of the resin particles includes crosslinked resin fine particles, and the crosslinked resin fine particles have a particle size of 40 to 200 nm.

SUMMARY OF THE INVENTION

With the expansion of fields such as on-demand publishing using electrophotographic, there is a demand for fixability of not only a solid image but also a halftone portion. In addition, in the publishing field, since a printed image is provided as a final printed matter through processes such as cutting and bookbinding, the printed image may be stressed by various post-processing machines.

It has been known that a crystalline resin is added to the toner in order to secure fixability, but the addition of the crystalline resin lowers abrasion resistance of the image, and therefore it is difficult to achieve both fixability and post-processing machine contamination prevention. Further, in the related art, it is difficult to prevent contamination in a wide range of temperatures from a low-temperature environment to a high-temperature environment in a treatment with the post-processing machine.

An object of the present invention is to achieve, by adding styrene-acrylic crosslinked resin particles to a toner to which a crystalline resin is added, both fixability in a halftone portion and prevention of post-processing machine contamination in a wide temperature range, as compared with a case where acrylates are not localized on a surface of the crosslinked resin particles.

According to a first aspect of the present disclosure, there is provided an electrostatic charge image developing toner containing a binder resin and resin particles, in which the binder resin includes an amorphous resin and a crystalline resin, the resin particles contain a styrene-(meth)acrylate-based copolymer, in a case where a glass transition temperature obtained by Fox equation from a ratio of constituent monomers in the entire resin particles is defined as Tg(C1)°C and a glass transition temperature actually measured with a differential scanning calorimeter is defined as Tg(E)°C, $5.0 \leq Tg(E) - Tg(C1) \leq 20.0$, and in a case where a glass transition temperature obtained by Fox equation using a ratio of constituent monomers, calculated from a surface analysis of the resin particles, is defined as Tg(C2)°C, Tg(C1) > Tg(C2).

According to a second aspect of the present disclosure, there is provided an electrostatic charge image developing toner containing a binder resin and resin particles, in which the binder resin includes an amorphous resin and a crystalline resin, the resin particles contain a styrene-(meth)acrylate-based copolymer, and in a case where a proportion of units derived from a (meth)acrylate monomer in the resin particles is defined as Wa(B)% by mole, and a proportion of units derived from a (meth)acrylate monomer, by a surface analysis of the resin particles, is defined as Wa(S)% by mole, Wa(S) is 40% by mole or more and 80% by mole or less and $2 \leq Wa(S) - Wa(B) \leq 20$.

According to a third aspect of the present disclosure, there is provided the electrostatic charge image developing toner according to the first aspect or the second aspect, in which Tg(E) may be 0°C or higher and 30°C or lower.

According to a fourth aspect of the present disclosure, there is provided the electrostatic charge image developing toner according to the first aspect or the third aspect, in which the resin particles may be crosslinked particles.

According to a fifth aspect of the present disclosure, there is provided the electrostatic charge image developing toner according to any one of the first aspect to the fourth aspect, in which a proportion of the crystalline resin in the binder resin may be 15% by mass or more and 40% by mass or less.

According to a sixth aspect of the present invention, there is provided the electrostatic charge image developing toner according to any one of the first aspect to the fifth aspect, in which the resin particles may be contained in an amount of 2% by mass or more and 20% by mass or less.

According to a seventh aspect of the present disclosure is the electrostatic charge image developing toner according to any one of the first aspect to the sixth aspect, in which a ratio w1/w2 of a content w1 of the resin particles in the toner to a content w2 of the crystalline resin in the toner may be 0.2 or more and 2.0 or less.

According to an eighth aspect of the present disclosure, there is provided the electrostatic charge image developing toner according to any one of the first aspect to the seventh aspect, in which the amorphous resin may include an amorphous polyester resin, and the crystalline resin may include a crystalline polyester resin.

According to a ninth aspect of the present disclosure, there is provided the electrostatic charge image developing toner according to the eighth aspect, in which the amorphous polyester resin may include a unit derived from isophthalic acid, and a proportion of the unit derived from isophthalic acid in units derived from an acid component monomer of the amorphous polyester resin may be 10% by mole or more and 50% by mole or less.

According to a tenth aspect of the present disclosure, there is provided the electrostatic charge image developing toner according to the eighth aspect or the ninth aspect, in which an acid value of the amorphous polyester resin may be 5 mgKOH/g or more and 20 mgKOH/g or less.

According to a eleventh aspect of the present disclosure, there is provided the electrostatic charge image developing toner according to any one of the eighth aspect to the tenth aspect, in which, in a case where a glass transition temperature of the amorphous polyester resin, actually measured with a differential scanning calorimeter, may be defined as $Tg(ap)°C$, $40 < Tg(ap) - Tg(C1) \leq 90$.

According to a twelfth aspect of the present disclosure, there is provided the electrostatic charge image developing toner according to any one of the first aspect to the eleventh aspect, in which, in a case where an SP value calculated by Fedors method of the binder resin may be defined as SP(ap), and an SP value calculated by Fedors method from a monomer composition that is obtained by the surface analysis of the resin particles may be defined as $SP(sa)$, $|SP(ap) - SP(sa)| \leq 0.4$.

According to a thirteenth aspect of the present disclosure, there is provided the electrostatic charge image developing toner according to any one of the first aspect to the twelfth aspect, in which an average equivalent circle diameter of a domain formed by the resin particles may be 50 nm or more and 300 nm or less.

According to a fourteenth aspect of the present disclosure, there is provided the electrostatic charge image developing toner according to any one of the first aspect to the thirteenth aspect, in which an average shape factor SF-1 of a domain formed by the resin particles may be 130 or less.

According to a fifteenth aspect of the present disclosure, there is provided the electrostatic charge image developing toner according to the second aspect, in which the resin particles may be crosslinked particles.

According to the first aspect of the present invention, in the electrostatic charge image developing toner to which the crystalline resin and the styrene-(meth)acrylate-based resin particles are added, in a case where a glass transition temperature obtained by Fox equation from a ratio of constituent monomers in the entire resin particles is defined as $Tg(C1)°C$, and a glass transition temperature obtained by Fox equation using a ratio of constituent monomers, calculated from a surface analysis of the resin particles, is defined as $Tg(C2)°C$, it is possible to achieve both fixability in a halftone portion and post-processing machine contamination prevention in a wide temperature range, as compared to a case where Tg(C2) is equal to or higher than Tg(C1).

According to the second aspect of the present invention, in a case where a proportion of units derived from a (meth)acrylate monomer in the resin particles is defined as $Wa(B)\%$ by mole, and a proportion of units derived from a (meth)acrylate monomer, by a surface analysis of the resin particles, is defined as $Wa(S)\%$ by mole, it is possible to provide an electrostatic charge image developing toner that achieves both fixability in a halftone portion and post-processing machine contamination prevention in a wide temperature range, as compared to a case where (Wa(S) - Wa(B)) is less than 2 or more than 20.

According to the third aspect of the present invention, it is possible to provide an electrostatic charge image developing toner that prevents post-processing machine contamination in a wide temperature range, as compared to a case where the glass transition temperature $Tg(E)°C$ of the resin particles, actually measured with a differential scanning calorimeter, is lower than 0°C or higher than 30°C.

According to the fourth aspect of the present invention, it is possible to provide an electrostatic charge image developing toner in which the resin particles are dispersed satisfactorily in an image even after fixing and the post-processing machine contamination is prevented, as compared to a case where the resin particles are not the crosslinked particles.

According to the fifth aspect of the present invention, it is possible to provide an electrostatic charge image developing toner in which deformation of the toner during fixing is within a moderate range and good fixability is obtained especially in the halftone portion, as compared to a case where the proportion of the crystalline resin in the binder resin is less than 15% by mass or more than 40% by mass.

According to the sixth aspect of the present invention, it is possible to provide an electrostatic charge image developing toner that achieves both fixability in a halftone portion and post-processing machine contamination prevention in a wide temperature range, as compared to a case where the electrostatic charge image developing toner contains the resin particles in an amount of less than 2% by mass or more than 20% by mass.

According to the seventh aspect of the present invention, it is possible to provide an electrostatic charge image developing toner that is appropriately deformed during fixing and may obtain low-temperature fixability, as compared to a case where the ratio w1/w2 of the content w1 of the resin particles in the toner to the content w2 of the crystalline resin in the toner is less than 0.2 or more than 2.0.

According to the eighth aspect of the present invention, it is possible to provide an electrostatic charge image developing toner in which affinity between the binder resin and the resin particles is ensured, as compared to a case where the amorphous resin does not include an amorphous polyester resin or a case where the crystalline resin does not include a crystalline polyester resin.

According to the ninth aspect of the present invention, it is possible to provide an electrostatic charge image developing toner in which affinity between the binder resin and the resin particles is ensured, as compared to a case where the proportion of the unit derived from isophthalic acid in units derived from an acid component monomer of the amorphous polyester resin is less than 10% by mole or more than 50% by mole.

According to the tenth aspect of the present invention, it is possible to provide an electrostatic charge image developing toner in which affinity between the binder resin and the resin particles is ensured, as compared to a case where the acid value of the amorphous polyester resin is less than 5 mgKOH/g or more than 20 mgKOH/g.

According to the eleventh aspect of the present invention, in a case where a glass transition temperature of the amorphous polyester resin, actually measured with a differential scanning calorimeter, is defined as $Tg(ap)$ and a glass transition temperature obtained by Fox equation from a ratio of constituent monomers in the entire resin particles is defined as $Tg(C1)°C$, it is possible to provide an electrostatic charge image developing toner in which affinity between the binder resin and the resin particles is ensured, as compared to a case where $(Tg(ap) - Tg(C1))$ is less than 40 or more than 90.

According to the twelfth aspect of the present invention, in a case where an SP value calculated by Fedors method of the binder resin is defined as $SP(ap)$ and an SP value calculated by Fedors method from a monomer composition that is obtained by the surface analysis of the resin particles is defined as $SP(sa)$, it is possible to provide an electrostatic charge image developing toner in which affinity between the binder resin and the resin particles is ensured, as compared to a case where $|SP(ap) - SP(sa)|$ is more than 0.4.

According to the thirteenth aspect of the present invention, it is possible to provide an electrostatic charge image developing toner that does not hider fixing and prevents post-processing machine contamination, as compared to a case where the average equivalent circle diameter of the domain formed by the resin particles is less than 50 nm or more than 300 nm.

According to the fourteenth aspect of the present invention, it is possible to provide an electrostatic charge image developing toner that does not hider fixing and prevents post-processing machine contamination, as compared to a case where the average shape factor SF-1 of the domain formed by the resin particles is more than 130.

According to the fifteenth aspect of the present invention, it is possible to provide an electrostatic charge image developing toner in which the resin particles are dispersed satisfactorily in an image even after fixing and the post-processing machine contamination is prevented, as compared to a case where the resin particles are not the crosslinked particles.

BRIEF DESCRIPTION OF THE DRAWINGS

Exemplary embodiment(s) of the present invention will be described in detail based on the following figures, wherein:

Fig. 1 is a view schematically showing the configuration of an example of an image forming apparatus according to the present exemplary embodiment; and
Fig. 2 is a view schematically showing the configuration of an example of a process cartridge detachable from the image forming apparatus according to the present exemplary embodiment.

DETAILED DESCRIPTION OF THE INVENTION

Hereinafter, exemplary embodiments of the invention will be described. The following descriptions, examples, and the like merely illustrate the exemplary embodiments, and do not restrict the scope of the invention.

In the present disclosure, unless otherwise specified, the description of "OO or more and OO or less" or "OO to OO" that represent a numerical range means a numerical range including the described upper limit and lower limit. In addition, in a case where the amount of each component in a composition is mentioned in the present disclosure, and there are two or more kinds of substances corresponding to each component in the composition, unless otherwise specified, the amount of each component means the total amount of two or more kinds of the substances present in the composition.

In the present disclosure, "electrostatic charge image developing toner" will be simply described as "toner" in some cases, "electrostatic charge image developing carrier" will be simply described as "carrier" in some cases, and "electrostatic charge image developer" will be simply described as "developer" in some cases.

In the present disclosure, (meth)acrylic means both acrylic and methacrylic.

<Electrostatic Charge Image Developing Toner>

The electrostatic charge image developing toner according to the present exemplary embodiment contains a binder resin and resin particles, in which the binder resin includes an amorphous resin and a crystalline resin, the resin particles contain a styrene-(meth)acrylate-based copolymer, in a case where a glass transition temperature obtained by Fox equation from a ratio of constituent monomers in the entire resin particles is defined as $Tg(C1)°C$ and a glass transition temperature actually measured with a differential scanning calorimeter is defined as $Tg(E)°C$, $5.0 \leq Tg(E) - Tg(C1) \leq 20.0$, and in a case where a glass transition temperature obtained by Fox equation using a ratio of constituent monomers, calculated from a surface analysis of the resin particles, is defined as $Tg(C2)°C$, $Tg(C1) > Tg(C2)$.

With the expansion such as on-demand publishing using electrophotographic, low-temperature fixability is required in a halftone portion, in addition to a solid portion. In addition, in the publishing field, since a printed image is provided as a final printed matter through processes such as cutting and bookbinding, the printed image may be subjected to various stresses by a post-processing machine.

It has been known to add a crystalline resin to the toner in order to secure low-temperature fixability. However, in the toner containing a large amount of the crystalline resin, since crystallization has not progressed immediately after a fixing step, a part of the image may be lost due to rubbing in the post-processing machine, or image components adhering to a transporting member of the post-processing machine may be redeposit on the blank paper and stain the paper.

Since the toner according to the present exemplary embodiment has the above-described configuration, it is possible to achieve both low-temperature fixability in a halftone portion and prevention of post-processing machine contamination in a wide temperature range. The following is presumed as the mechanism.

In the present exemplary embodiment, since the fact that (1) the toner contains, in the toner, resin particles that absorb external pressure over a wide temperature range and that (2) the resin particles existing as a domain inside the toner have a high affinity with the binder resin are simultaneously satisfied, it is presumed that the above-described achievements can be obtained.

With regard to (1), for example, in a case where a material having a glass transition point in the vicinity of room temperature, such as the resin particles, is present in the toner, since a loss tangent of the resin increases in the vicinity of the glass transition point, it is expected that deformation of the image surface is absorbed by absorbing pressure from the outside, thereby preventing image migration. However, in a case where the resin composition is uniform, since a temperature range in which the loss tangent is large is narrowed, the improvement effect cannot be obtained in cases where the paper temperature fluctuates, the post-processing speed is different, and the like.

The deviation between the glass transition temperature of the resin particles according to the present exemplary embodiment according to the Fox equation and the glass transition temperature of the actual measurement means that styrene and (meth)acrylate as monomers are not randomly bonded, and an arrangement mainly composed of styrene and an arrangement mainly composed of (meth)acrylate are mixed. In a structure in which such arrangements are mixed, since a region with a relatively low glass transition temperature and a region with a relatively high glass transition temperature are present in the domain of the resin particles, and glass transition occurs in a wider temperature range (temperature range in which the glass transition occurs widens), it is presumed that an impact can be absorbed in a wide temperature range.

With regard to (2), in a case where the affinity between the resin particles and the binder resin is low, cracks are likely to occur at an interface between the resin particles and the binder resin due to an impact from the outside. Therefore, in a case where the above-described affinity is low, a part of the image may be broken in a portion subjected to excessive stress by the post-processing machine, and the post-processing machine may be contaminated. In order to prevent the occurrence of post-processing machine contamination, by increasing the affinity between the resin particles and the binder resin, that is, by arranging the portion where the (meth)acrylate is localized as the main component on the surface of the resin particles, it is presumed that the cracks can be prevented from occurring at the interface between the binder resin and the surface of the resin particles.

From the above, it is presumed that, by satisfying both (1) and (2) described above, it is presumed that it is possible to achieve both low-temperature fixability in a halftone portion and prevention of post-processing machine contamination in a wide temperature range.

Hereinafter, the configuration of the electrostatic charge image developing toner according to the present exemplary embodiment will be described in detail.

The electrostatic charge image developing toner according to the present exemplary embodiment contains a binder resin and resin particles. The toner particles include, for example, the binder resin, the resin particles, and as necessary, a colorant, a release agent, and other additives.

-Binder Resin-

Examples of the binder resin include vinyl-based resins consisting of a homopolymer of a monomer, such as styrenes (for example, styrene, p-chlorostyrene, $\alpha$-methylstyrene, and the like), (meth)acrylic acid esters (for example, methyl acrylate, ethyl acrylate, n-propyl acrylate, n-butyl acrylate, lauryl acrylate, 2-ethylhexyl acrylate, methyl methacrylate, ethyl methacrylate, n-propyl methacrylate, lauryl methacrylate, 2-ethylhexyl methacrylate, and the like), ethylenically unsaturated nitriles (acrylonitrile, methacrylonitrile, and the like), vinyl ethers (for example, vinyl methyl ether, vinyl isobutyl ether, and the like), vinyl ketones (for example, vinyl methyl ketone, vinyl ethyl ketone, vinyl isopropenyl ketone, and the like), olefins (for example, ethylene, propylene, butadiene, and the like), or a copolymer obtained by combining two or more kinds of monomers described above.

Examples of the binder resin include non-vinyl-based resins such as an epoxy resin, a polyester resin, a polyurethane resin, a polyamide resin, a cellulose resin, a polyether resin, and modified rosin, mixtures of these with the vinyl-based resins, or graft polymers obtained by polymerizing a vinyl-based monomer together with the above resins.

One kind of each of these binder resins may be used alone, or two or more kinds of these binder resins may be used in combination.

For example, the binder resin preferably contains a polyester resin.

By containing the polyester resin as the binder resin, in a case where a styrene-(meth)acrylic copolymer is used as the resin particles as described later, the affinity between the binder resin and the resin particles is increased, and deterioration of dispersibility of the resin particles is suppressed.

The binder resin contains an amorphous resin and a crystalline resin.

Here, the amorphous resin means a resin that shows only a stepwise change in amount of heat absorbed instead of having a clear endothermic peak in a case where the resin is measured by a thermoanalytical method using differential scanning calorimetry (DSC), and stays as a solid at room temperature but turns thermoplastic at a temperature equal to or higher than a glass transition temperature.

On the other hand, the crystalline resin means a resin that a clear endothermic peak is present in differential scanning calorimetry (DSC) rather than a stepwise change in endothermic amount, for example, a resin that the half-width of the endothermic peak during measurement at a temperature rising rate of 10°C/min is within 10°C.

The amorphous resin will be described.

Examples of the amorphous resin include known amorphous resins such as an amorphous polyester resin, an amorphous vinyl resin (such as a styrene acrylic resin), an epoxy resin, a polycarbonate resin, and a polyurethane resin. Among the amorphous resins, for example, an amorphous polyester resin or an amorphous vinyl resin (particularly, a styrene acrylic resin) is preferable, and an amorphous polyester resin is more preferable.

· Amorphous Polyester Resin

Examples of the amorphous polyester resin include a polycondensate of a polyvalent carboxylic acid and a polyhydric alcohol. As the amorphous polyester resin, a commercially available product or a synthetic resin may be used.

Examples of the polyvalent carboxylic acid include aliphatic dicarboxylic acids (for example, oxalic acid, malonic acid, maleic acid, fumaric acid, citraconic acid, itaconic acid, glutaconic acid, succinic acid, alkenyl succinic acid, adipic acid, sebacic acid, and the like), alicyclic dicarboxylic acid (for example, cyclohexanedicarboxylic acid and the like), aromatic dicarboxylic acids (for example, terephthalic acid, isophthalic acid, phthalic acid, naphthalenedicarboxylic acid, and the like), anhydrides of these, and lower alkyl esters (for example, having 1 or more and 5 or less carbon atoms). Among the polyvalent carboxylic acids, for example, aromatic dicarboxylic acids are preferable. In particular, from the viewpoint of ensuring the affinity between the binder resin and the resin particles, for example, it is preferable to contain isophthalic acid. In a case of using isophthalic acid, for example, the unit derived from isophthalic acid is preferably 10% by mole or more and 50% by mole or less, and more preferably 15% by mole or more and 40% by mole or less with respect to units derived from an acid component monomer of the amorphous polyester resin.

In a case where two or more kinds of amorphous polyester resins are used in combination, for example, it is preferable that the unit derived from isophthalic acid is contained in an amount of 10% by mole or more and 50% by mole or less in terms of weighted average.

As the polyvalent carboxylic acid, a carboxylic acid having a valency of 3 or more that has a crosslinked structure or a branched structure may be used in combination with a dicarboxylic acid. Examples of the carboxylic acid having a valency of 3 or more include trimellitic acid, pyromellitic acid, anhydrides of these acids, and lower alkyl esters (for example, having 1 or more and 5 or less carbon atoms) of these acids.

One kind of polyvalent carboxylic acid may be used alone, or two or more kinds of polyvalent carboxylic acids may be used in combination.

Examples of the polyhydric alcohol include aliphatic diols (for example, ethylene glycol, diethylene glycol, triethylene glycol, propylene glycol, butanediol, hexanediol, neopentyl glycol, and the like), alicyclic diols (for example, cyclohexanediol, cyclohexanedimethanol, hydrogenated bisphenol A, and the like), and aromatic diols (for example, an ethylene oxide adduct of bisphenol A, a propylene oxide adduct of bisphenol A, and the like). Among the polyhydric alcohols, for example, an aromatic diol or an alicyclic diol is preferable, and an aromatic diol is more preferable.

As the polyhydric alcohol, a polyhydric alcohol having three or more hydroxyl groups and a crosslinked structure or a branched structure may be used in combination with a diol. Examples of the polyhydric alcohol having three or more hydroxyl groups include glycerin, trimethylolpropane, and pentaerythritol.

One kind of polyhydric alcohol may be used alone, or two or more kinds of polyhydric alcohols may be used in combination.

From the viewpoint of ensuring the affinity between the binder resin and the resin particles, the acid value of the amorphous polyester resin is, for example, preferably 5 mgKOH/g or more and 20 mgKOH/g or less, and more preferably 7 mgKOH/g or more and 16 mgKOH/g or less.

The acid value of the amorphous polyester resin is measured as follows.

The toner to be measured is dissolved in THF to remove insoluble components, and then the amorphous polyester resin is separated. Using the separated amorphous polyester resin, the acid value of the resin is measured according to a method defined in JIS K0070-1992 (neutralization titration method).

The acid value represents the number of mg of potassium hydroxide required to neutralize an acid group (for example, a carboxyl group) in 1 g of the sample.

The glass transition temperature (Tg) of the amorphous polyester resin is, for example, preferably 50°C or higher and 80°C or lower, and more preferably 50°C or higher and 70°C or lower.

The glass transition temperature obtained by actual measurement, including cases other than the amorphous polyester resin, is determined from a DSC curve obtained by differential scanning calorimetry (DSC). More specifically, the glass transition temperature is determined by "extrapolated glass transition onset temperature" described in the method for determining a glass transition temperature in JIS K 7121-1987, "Testing methods for transition temperatures of plastics". The glass transition temperature of the amorphous polyester resin is measured with respect to the amorphous polyester resin separated from the toner to be measured, obtained in the same manner as the acid value described above.

In a case where an SP value calculated by Fedors method from a monomer composition that is obtained by the surface analysis of the resin particles is defined as SP(sa), and an SP value calculated by Fedors method of the entire binder resin is defined as SP(ap), for example,

$$|SP(ap) - SP(sa)| \leq 0.4$$

is preferable, and

$$|SP(ap) - SP(sa)| \leq 0.3$$

is more preferable.

As described above, as the values of the two types of SP values are closer, the affinity between the binder resin and the resin particles can be more ensured.

With regard to the monomer composition obtained by the surface analysis of the resin particles, a surface analysis is performed using an X-ray photoelectron spectroscope (XPS). In the present disclosure, JPS-9000MX manufactured by JEOL Ltd. is used as an XPS measurement device, the measurement is performed using MgKα radiation as an X-ray source, at an acceleration voltage set to 10 kV, and an emission current set to 30 mA. Specifically, in a case where the resin particles are crosslinked particles, resin particles taken out from the toner as tetrahydrofuran (THF)-insoluble matter are measured by the surface analysis to obtain the monomer composition. With regard to the monomer composition obtained by the surface analysis, a surface analysis is performed using an X-ray photoelectron spectroscope (XPS). In the present disclosure, JPS-9000MX manufactured by JEOL Ltd. is used as an XPS measurement device, the measurement is performed using MgKα radiation as an X-ray source, at an acceleration voltage set to 10 kV, and an emission current set to 30 mA.

In addition, the SP value SP(ap) calculated by Fedors method of the entire binder resin can be obtained by dissolving in THF, removing insoluble components, and then obtaining the monomer composition from NMR measurement of the extract.

The solubility parameter SP values SP(ap) and SP(sa) (unit: $(cal/cm^3)^{1/2}$) are calculated by Fedors method. Specifically, the SP values are calculated by the following equation.

$$\text{Equation: SP value} = \sqrt{(Ev/v)} = \sqrt{(\Sigma\Delta ei/\Sigma\Delta vi)}$$

(in the equation, Ev: evaporation energy (cal/mol), v: molar volume ($cm^3$/mol), $\Delta ei$: evaporation energy of each atom or atomic group, and $\Delta vi$: molar volume of each atom or atomic group)

Details of this calculation method are described in Polym. Eng. Sci., Vol. 14, p. 147 (1974), Junji Mukai et al., "Practical Polymers for Engineers", p. 66 (Kodansha, 1981), Polymer Handbook (4th Edition, Willey-interscience Publication), and the like. The same method as described in these documents can also be used in the present exemplary embodiment.

In the present exemplary embodiment, $(cal/cm^3)^{1/2}$ is adopted as the unit of the SP value. In the present specification, the SP value is dimensionlessly written without the unit according to the custom.

The weight-average molecular weight (Mw) of the amorphous polyester resin is, for example, preferably 5,000 or more and 1,000,000 or less, and more preferably 7,000 or more and 500,000 or less.

The number-average molecular weight (Mn) of the amorphous polyester resin is, for example, preferably 2,000 or more and 100,000 or less.

The molecular weight distribution Mw/Mn of the amorphous polyester resin is, for example, preferably 1.5 or more and 100 or less, and more preferably 2 or more and 60 or less.

The weight-average molecular weight and the number-average molecular weight are measured by gel permeation chromatography (GPC). By GPC, the molecular weight is measured using GPC HLC-8120GPC manufactured by Tosoh Corporation as a measurement device, TSKgel Super HM-M (15 cm) manufactured by Tosoh Corporation as a column, and THF as a solvent. The weight-average molecular weight and the number-average molecular weight are calculated using a molecular weight calibration curve plotted using a monodisperse polystyrene standard sample from the measurement results.

The amorphous polyester resin is obtained by a well-known manufacturing method. Specifically, for example, the polyester resin is obtained by a method of setting a polymerization temperature to 180°C or higher and 230°C or lower, reducing the internal pressure of a reaction system as necessary, and carrying out a reaction while removing water or an alcohol generated during condensation.

In a case where monomers as raw materials are not dissolved or compatible at the reaction temperature, in order to dissolve the monomers, a solvent having a high boiling point may be added as a solubilizer. In this case, a polycondensation reaction is carried out in a state where the solubilizer is distilled off. In a case where a monomer with poor compatibility takes part in the reaction, for example, the monomer with poor compatibility may be condensed in advance with an acid or an alcohol that is to be polycondensed with the monomer, and then polycondensed together with the main component.

The crystalline resin will be described.

Examples of the crystalline resin include known crystalline resins such as a crystalline polyester resin, and a crystalline vinyl resin (such as a polyalkylene resin and a long-chain alkyl (meth)acrylate resin). Among the crystalline resins, in view of mechanical strength and low-temperature fixability of the toner, for example, a crystalline polyester resin is preferable.

· Crystalline Polyester Resin

Examples of the crystalline polyester resin include a polycondensate of polyvalent carboxylic acid and polyhydric alcohol. As the crystalline polyester resin, a commercially available product or a synthetic resin may be used.

Here, since the crystalline polyester resin easily forms a crystal structure, the crystalline polyester resin is, for example, preferably a polycondensate that is not formed of an aromatic-containing polymerizable monomer but is formed of a linear aliphatic polymerizable monomer.

Examples of the polyvalent carboxylic acid include aliphatic dicarboxylic acids (such as oxalic acid, succinic acid, glutaric acid, adipic acid, suberic acid, azelaic acid, sebacic acid, 1,9-nonanedicarboxylic acid, 1,10-decanedicarboxylic acid, 1,12-dodecanedicarboxylic acid, 1,14-tetradecanedicarboxylic acid, and 1,18-octadecanedicarboxylic acid), aromatic dicarboxylic acids (such as dibasic acids such as phthalic acid, isophthalic acid, terephthalic acid, and naphthalene-2,6-dicarboxylic acid), anhydrides of these dicarboxylic acids, and lower alkyl esters (for example, having 1 or more and 5 or less carbon atoms) of these dicarboxylic acids.

As the polyvalent carboxylic acid, a carboxylic acid having a valency of 3 or more that has a crosslinked structure or a branched structure may be used in combination with a dicarboxylic acid. Examples of the trivalent carboxylic acids include aromatic carboxylic acid (for example, 1,2,3-benzenetricarboxylic acid, 1,2,4-benzenetricarboxylic acid, 1,2,4-naphthalenetricarboxylic acid, and the like), anhydrides of these aromatic carboxylic acids, and lower alkyl esters (for example, having 1 or more and 5 or less carbon atoms) of these aromatic carboxylic acids.

As the polyvalent carboxylic acid, a dicarboxylic acid having a sulfonic acid group or a dicarboxylic acid having an ethylenically double bond may be used together with these dicarboxylic acids.

One kind of polyvalent carboxylic acid may be used alone, or two or more kinds of polyvalent carboxylic acids may be used in combination.

Examples of the polyhydric alcohol include an aliphatic diol (for example, a linear aliphatic diol having 7 or more and 20 or less carbon atoms in a main chain portion). Examples of the aliphatic diol include ethylene glycol, 1,3-propanediol, 1,4-butanediol, 1,5-pentanediol, 1,6-hexanediol, 1,7-heptanediol, 1,8-octanediol, 1,9-nonanediol, 1,10-decanediol, 1,11-undecanediol, 1,12-dodecanediol, 1,13-tridecanediol, 1,14-tetradecanediol, 1,18-octadecanediol, and 1,14-eicosanedecanediol. Among the aliphatic diols, for example, 1,8-octanediol, 1,9-nonanediol, or 1,10-decanediol is preferable.

As the polyhydric alcohol, an alcohol having a valency of 3 or more, that forms a crosslinked structure or a branched structure, may be used in combination with the diol. Examples of the alcohol having a valency of 3 or more include glycerin, trimethylolethane, and trimethylolpropane, pentaerythritol.

One kind of polyhydric alcohol may be used alone, or two or more kinds of polyhydric alcohols may be used in combination.

Here, the content of the aliphatic diol in the polyhydric alcohol may be 80% by mole or more and, for example, preferably 90% by mole or more.

The melting temperature of the crystalline polyester resin is, for example, preferably 50°C or higher and 100°C or lower, more preferably 55°C or higher and 90°C or lower, and even more preferably 60°C or higher and 85°C or lower.

The melting temperature is determined from a DSC curve obtained by differential scanning calorimetry (DSC) by "peak melting temperature" described in the method for determining the melting temperature in JIS K7121-1987, "Testing methods for transition temperatures of plastics".

The weight-average molecular weight (Mw) of the crystalline polyester resin is, for example, preferably 6,000 or more and 50,000 or less.

The crystalline polyester resin can be obtained by a well-known manufacturing method, for example, same as the amorphous polyester resin.

In a case where the toner contains a crystalline resin, the content of the crystalline resin with respect to the entire binder resin is, for example, preferably 15% by mass or more and 40% by mass or less, and more preferably 17% by mass or more and 37% by mass or less.

In a case where the content of the crystalline resin is within the above-described range, it is considered that the deformation of the toner during fixing is in an appropriate range, and good fixability can be obtained particularly in the halftone portion.

In addition, in order to secure the affinity between the binder resin and the resin particles, for example, it is preferable that the binder resin includes an amorphous polyester resin and a crystalline polyester resin. In a case where the binder resin includes an amorphous polyester resin and a crystalline polyester resin, since both resins have an aliphatic dicarboxylic acid unit, the resin particles can be dispersed more uniformly.

As the aliphatic dicarboxylic acid, for example, a saturated aliphatic dicarboxylic acid represented by General Formula "HOOC-$(CH_2)_n$-COOH" can be preferably used. n in the general formula is, for example, preferably 4 to 20, and more preferably 4 to 12.

The content of the binder resin with respect to the total amount of the toner is, for example, preferably 40% by mass or more and 98% by mass or less, more preferably 50% by mass or more and 95% by mass or less, and even more preferably 60% by mass or more and 93% by mass or less.

-Resin Particles-

As described above, the electrostatic charge image developing toner according to the present exemplary embodiment contains the binder resin and the resin particles incompatible with the binder resin (hereinafter, also referred to as specific resin particles).

The specific resin particles are, for example, preferably crosslinked particles. In a case of the crosslinked particles, even after fixing, the crosslinked particles are satisfactorily dispersed in the image, and contamination of the post-processing machine can be prevented.

Examples of the crosslinked particles include crosslinked particles crosslinked by an ionic bond (ionically crosslinked particles), and crosslinked particles crosslinked by a covalent bond (covalently crosslinked particles). Among these resin particles, for example, crosslinked particles crosslinked by a covalent bond are preferable.

Examples of the type of the resin used for the specific resin particles include a polyolefin-based resin (such as polyethylene and polypropylene), a styrene-based resin (such as polystyrene and α-polymethylstyrene), a (meth)acrylic resin (such as polymethyl methacrylate and polyacrylonitrile), an epoxy resin, a polyurethane resin, a polyurea resin, a polyamide resin, a polycarbonate resin, a polyether resin, a polyester resin, and copolymer resins of these compounds. As necessary, each of these resins may be used alone, or two or more of these resins may be used in combination.

Among the above resins, for example, a styrene-(meth)acrylic copolymer is contained as the resin used for the specific resin particles. Specifically, the resin particles contain the styrene-(meth)acrylic copolymer as a main component in an amount of 50% by mass or more, for example, preferably 80% by mass or more and more preferably 90% by mass or more. In particular, for example, it is preferable that substantially all of the resin particles are the styrene-(meth)acrylic copolymer. In addition, the total of styrene-based monomer and (meth)acrylic monomer as monomers constituting the copolymer is, for example, preferably 80% by mass or more, more preferably 90% by mass or more, and particularly preferably 95% by mass or more. For example, it is particularly preferable that the balance is a crosslinking agent described later so that the specific resin particles are to be crosslinked particles.

In a case where the specific resin particles are particles of the styrene-(meth)acrylic copolymer, it is easy to obtain a toner that achieves both fixability in a halftone portion and post-processing machine contamination prevention in a wide temperature range.

Examples of the styrene-(meth)acrylic copolymer include a resin obtained by polymerizing the following styrene-based monomer and (meth)acrylic acid-based monomer by radical polymerization.

Examples of the styrene-based monomer include styrene, $\alpha$-methylstyrene, vinylnaphthalene; alkyl-substituted styrene with an alkyl chain, such as 2-methylstyrene, 3-methylstyrene, 4-methylstyrene, 2-ethylstyrene, 3-ethylstyrene, and 4-ethylstyrene; halogen-substituted styrene such as 2-chlorostyrene, 3-chlorostyrene, and 4-chlorostyrene; and fluorine-substituted styrene such as 4-fluorostyrene and 2,5-difluorostyrene. Among the styrene-based monomers, for example, styrene or $\alpha$-methylstyrene is preferable.

Examples of the (meth)acrylic acid-based monomer include (meth)acrylic acid, n-methyl (meth)acrylate, n-ethyl (meth)acrylate, n-propyl (meth)acrylate, n-butyl (meth)acrylate, n-pentyl (meth)acrylate, n-hexyl (meth)acrylate, n-heptyl (meth)acrylate, n-octyl (meth)acrylate, n-decyl (meth)acrylate, n-dodecyl (meth)acrylate, n-lauryl (meth)acrylate, n-tetradecyl (meth)acrylate, n-hexadecyl (meth)acrylate, n-octadecyl (meth)acrylate, isopropyl (meth)acrylate, isobutyl (meth)acrylate, t-butyl (meth)acrylate, isopentyl (meth)acrylate, amyl (meth)acrylate, neopentyl (meth)acrylate, isohexyl (meth)acrylate, isoheptyl (meth)acrylate, isooctyl (meth)acrylate, 2-ethylhexyl (meth)acrylate, phenyl (meth)acrylate, biphenyl (meth)acrylate, diphenylethyl (meth)acrylate, t-butylphenyl (meth)acrylate, terphenyl (meth)acrylate, cyclohexyl (meth)acrylate, t-butylcyclohexyl (meth)acrylate, dimethylaminoethyl (meth)acrylate, diethylaminoethyl (meth)acrylate, methoxyethyl (meth)acrylate, 2-hydroxyethyl (meth)acrylate, 2-carboxyethyl (meth)acrylate, (meth)acrylonitrile, and (meth)acrylamide. Among these, for example, n-butyl (meth)acrylate or 2-carboxyethyl (meth)acrylate is preferable.

In the crosslinked particles, examples of a crosslinking agent for crosslinking the resin include aromatic polyvinyl compounds such as divinylbenzene and divinylnaphthalene; polyvinyl esters of aromatic polyvalent carboxylic acids, such as divinyl phthalate, divinyl isophthalate, divinyl terephthalate, divinyl homophthalate, divinyl trimesate, trivinyl trimesate, divinyl naphthalenedicarboxylate, and divinyl biphenylcarboxylate; divinyl esters of nitrogen-containing aromatic compounds, such as divinyl pyridine dicarboxylate; vinyl esters of unsaturated heterocyclic compound carboxylic acid, such as vinyl pyromucate, vinyl furan carboxylate, vinyl pyrrole-2-carboxylate, and vinyl thiophene carboxylate; (meth)acrylic acid esters of linear polyhydric alcohols, such as butanediol diacrylate, butanediol dimethacrylate, hexanediol diacrylate, hexanediol dimethacrylate, octanediol diacrylate, octanediol dimethacrylate, nonanediol diacrylate, nonanediol dimethacrylate, decanediol diacrylate, decanediol dimethacrylate, dodecanediol diacrylate, and dodecanediol dimethacrylate; (meth)acrylic acid esters of branched substituted polyhydric alcohols, such as neopentylglycol dimethacrylate and 2-hydroxy,1,3-diacryloxypropane; and polyvinyl esters of polyvalent carboxylic acids, such as polyethylene glycol di(meth)acrylate, polypropylene polyethylene glycol di(meth)acrylates, divinyl succinate, divinyl fumarate, vinyl maleate, divinyl maleate, divinyl diglycolate, vinyl itaconate, divinyl itaconate, divinyl acetone dicarboxylate, divinyl glutarate, 3,3'-divinylthiodipropionate, divinyl trans-aconitate, trivinyl trans-aconitate, divinyl adipate, divinyl pimelate, divinyl suberate, divinyl azelate, divinyl sebacate, divinyl dodecanedioate, and divinyl brassylate. One kind of crosslinking agent may be used alone, or two or more kinds of crosslinking agents may be used in combination.

Among these crosslinking agents, for example, it is preferable to use a bifunctional alkyl acrylate having an alkylene chain having 6 or more carbon atoms as the crosslinking agent for crosslinking the specific resin particles. That is, for example, the crosslinked specific resin particles preferably have a bifunctional alkyl acrylate as a constitutional unit, and the number of carbon atoms in the alkylene chain of the bifunctional alkyl acrylate is 6 or more.

By using crosslinked particles having the bifunctional alkyl acrylate as a constitutional unit, in which the number of carbon atoms in the alkylene chain is 6 or more, it is easy to obtain a toner in which the deformation of the toner during fixing is in an appropriate range and the fixability particularly in the halftone portion is good. In a case where a crosslinking density of the resin particles is high (that is, a distance between crosslinking points is short), elasticity is too high, but in a case where a bifunctional acrylate having a long alkylene chain is used as the crosslinking agent, the crosslinking density is low (that is, the distance between crosslinking points is long), and it is possible to prevent the elasticity of the specific resin particles from being too high.

From the viewpoint of adjusting the crosslinking density to an appropriate range, the number of carbon atoms in the alkylene chain of the bifunctional alkyl acrylate is, for example, preferably 6 or more, more preferably 6 or more and 12 or less, and even more preferably 8 or more and 12 or less. More specific examples of the bifunctional alkyl acrylate include 1,6-hexanediol acrylate, 1,6-hexanediol methacrylate, 1,8-octanediol diacrylate, 1,8-octanediol dimethacrylate, 1,9-nonanediol diacrylate, 1,9-nonanediol dimethacrylate, 1,10-decanediol diacrylate, 1,10-decanediol dimethacrylate, 1,12-dodecanediol diacrylate, and 1,12-dodecanediol dimethacrylate, and among these, for example, 1,10-decanediol diacrylate or 1,10-decanediol dimethacrylate is preferable.

In a case where the specific resin particles are a polymer of a composition for forming resin particles containing a styrene-based monomer, a (meth)acrylic acid-based monomer, and a crosslinking agent, the amount of the crosslinking agent contained in the composition may be adjusted so that the fixability of the resin particles is controlled. For example, by increasing the amount of the crosslinking agent contained in the composition, it is easy to obtain specific resin particles having good fixability. The content of the crosslinking agent in the composition for forming the specific resin particles with respect to, for example, the total of 100 parts by mass of the styrene-based monomer, the meth)acrylic acid-based monomer, and the crosslinking agent is preferably 0.3 parts by mass or more and 5.0 parts by mass or less, more preferably 0.5 parts by mass or more and 3.0 parts by mass or less, and even more preferably 0.8 parts by mass or more and 2.5 parts by mass or less.

Examples of other crosslinking agents include 2-carboxyethyl acrylate, and for example, it is preferable to use at least one of the above-described bifunctional alkyl acrylate or 2-carboxyethyl acrylate.

The glass transition temperature Tg(E) of the specific resin particles actually measured with the differential scanning calorimeter is, for example, preferably 0°C or higher and 30°C or lower and more preferably 5°C or higher and 25°C or lower. As compared to a case where the glass transition temperature Tg(E) of the specific resin particles is too high, the effect of absorbing the impact cannot be obtained at a low temperature, and it is possible to prevent the improvement of post-processing machine contamination. In addition, in a case where particles having a glass transition temperature of 0°C or lower, such as rubber particles, are used, since there is no function of absorbing the impact, frictional heat is generated due to repulsion from the inside, which may worsen the contamination. Therefore, for example, in a case where the glass transition temperature Tg(E) is 0°C or higher and 30°C or lower, there is a tendency that the toner in which the post-processing machine contamination is prevented can be obtained in a wide temperature range, that is preferable.

In the present exemplary embodiment, in a case where a glass transition temperature obtained by Fox equation from a ratio of constituent monomers in entire specific resin particles is defined as Tg(C1)°C, a difference between Tg(C1)°C and the glass transition temperature Tg(E)°C actually measured for the resin particles is

$$5.0 \leq Tg(E) - Tg(C1) \leq 20.0,$$

and in a case where a glass transition temperature obtained by Fox equation using a ratio of constituent monomers, calculated from a surface analysis of the resin particles, is defined as Tg(C2)°C,

$$Tg(C1) > Tg(C2).$$

In a case where the above-described two equations satisfy the conditions, in the toner, both the fixability in the halftone portion and the post-processing machine contamination prevention in a wide temperature range can be achieved. Furthermore, for example, it is preferable that

$$8.0 \leq Tg(E) - Tg(C1) \leq 18.0.$$

As described above, the equation of $5.0 \leq Tg(E) - Tg(C1) \leq 20.0$ indicates that the actually measured glass transition temperature Tg(E) is higher than the glass transition temperature Tg(C1) obtained by the Fox equation. As described above, the deviation between the glass transition temperature according to the Fox equation and the glass transition temperature of the actual measurement means that styrene and (meth)acrylate are not randomly bonded, and an arrangement mainly composed of styrene and an arrangement mainly composed of (meth)acrylate are mixed.

Next, the equation of Tg(C1) > Tg(C2) indicates that, among glass transition temperatures determined by the Fox equation, the glass transition temperature Tg(C1) of the entire specific resin particles is higher than the glass transition temperature Tg(C2) of the constituent monomer calculated from the surface analysis. Since the glass transition temperature of the polystyrene resin is approximately 100°C, the glass transition temperature of the (meth)acrylic resin is usually lower than the glass transition temperature of the polystyrene resin, and for example, the glass transition temperature of polyethyl acrylate is approximately - 20°C, it is considered that the equation of Tg(C1) > Tg(C2) indicates that the region of the arrangement with many (meth)acrylic units is unevenly distributed on the surface of the specific resin particles.

In addition, examples of another exemplary embodiment of the present invention include an electrostatic charge image developing toner containing the binder resin and the specific resin particles, in which the binder resin includes an amorphous resin and a crystalline resin, the specific resin particles contain a styrene-(meth)acrylate-based copolymer, and in a case where a proportion of units derived from a (meth)acrylate monomer in the specific resin particles is defined as Wa(B)% by mole, and a proportion of units derived from a (meth)acrylate monomer, by a surface analysis of the specific resin particles, is defined as Wa(S)% by mole, Wa(S) is 40% by mole or more and 80% by mole or less and $2 \leq Wa(S) - Wa(B) \leq 20$.

Furthermore, for example, Wa(S) is preferably 45% by mole or more and 75% by mole or less, and it is preferable that $5 \leq Wa(S) - Wa(B) \leq 15$.

The above-described equation of $2 \leq Wa(S) - Wa(B) \leq 20$ also indicates that there are more units derived from the (meth)acrylate monomer present on the surface than units derived from the (meth)acrylate monomer in the entire specific resin particles, and the units are unevenly distributed in the specific resin particles.

In the specific resin particles including the styrene-(meth)acrylic copolymer, adjustments of Tg(E), Tg(C2), Wa(S), and the like can be achieved by adjusting polymerization conditions of the copolymer. For example, in a case where a styrene-(meth)acrylic copolymer is prepared by an emulsion polymerization method, the adjustments can be achieved by sequentially dropping emulsions having different ratios of styrene and (meth)acrylate. Furthermore, the progress of the reaction can be controlled by adjusting polymerization temperature, polymerization time, method of adding a polymerization initiator, and the like in combination.

The ratio of the constituent monomer in the entire specific resin particles and the proportion Wa(B)% by mole of the units derived from the (meth)acrylate monomer in the specific resin particles are determined by separating the two using the difference in solubility in a solvent and identifying the separated components by NMR.

The proportion Wa(S) of the units derived from the (meth)acrylate monomer by the surface analysis is obtained as follows.

The specific resin particles are dried, surface composition is analyzed using an X-ray photoelectron spectroscope (XPS), and a ratio O(p) of the oxygen element to the sum of the carbon element and the oxygen element in the specific resin particles is obtained by the following equation.

$$O(p) = number\ of\ oxygen\ elements/(number\ of\ carbon\ elements + number\ of\ oxygen\ elements)$$

In addition, a resin made of only (meth)acrylate is produced, and a ratio O(a) of the oxygen element in the (meth)acrylate is obtained in the same manner.

From these measurement results, in a case where the sum of styrene and (meth)acrylate is set to 1, the surface (meth)acrylate ratio Wa(S) and the surface styrene ratio Ws(S) can be calculated by the following equations.

$$Wa(S) = O(p)/O(a)$$

$$Ws(S) = 1 - (O(p)/O(a))$$

Tg(C2) can be obtained by using these ratios.

The content of the specific resin particles is, for example, preferably 2% by mass or more and 20% by mass or less, and more preferably 5% by mass or more and 15% by mass or less with respect to the entire toner.

In a case where the content of the specific resin particles is within the above-described range, both the fixability in the halftone portion and the post-processing machine contamination prevention in a wide temperature range can be achieved.

In addition, the ratio w1/w2 of the content w1 of the resin particles in the toner to the content w2 of the crystalline resin in the toner is, for example, preferably 0.2 or more and 2.0 or less, and more preferably 0.3 or more and 1.5 or less.

In a case where w1/w2 is within the above-described range, the ratio of the specific resin particles to the crystalline resin is within a specific range, the toner is appropriately deformed during fixing, and the low-temperature fixability of the toner can be obtained.

In the amorphous resin including an amorphous polyester resin, in a case where a glass transition temperature of the amorphous polyester resin, actually measured with a differential scanning calorimeter, is defined as Tg(ap), a difference between the glass transition temperature Tg(ap) and a glass transition temperature Tg(C1)°C obtained by Fox equation from a ratio of constituent monomers in the entire specific resin particles is, for example, preferably

$$40 \leq Tg(ap) - Tg(C1) \leq 90.$$

By satisfying the equation, the affinity between the binder resin and the specific resin particles can be ensured.

As the actually measured glass transition temperature Tg(ap) of the amorphous polyester resin, Tg, that is obtained by dissolving the toner in tetrahydrofuran (THF) and removing insoluble components, storing the extract in an environment of, for example, 40°C to 55°C to sufficiently promote crystallization, and then measuring the glass transition temperature with a differential scanning calorimeter, can be regarded as the Tg(ap) of the amorphous polyester resin. In a case where the specific resin particles are crosslinked particles, the ratio of constituent monomers in the entire specific resin particles is obtained by measuring a ratio of monomers constituting specific resin particles taken out from the toner as THF-insoluble matter.

The average equivalent circle diameter of the domain formed in the toner by the individual specific resin particles is, for example, preferably 50 nm or more and 300 nm or less, and more preferably 80 nm or more and 250 nm or less. In a case where the average equivalent circle diameter is within the range, the fixing is not hindered, and the post-processing machine contamination can be prevented.

The measurement is performed by the following method.

The toner is mixed with and embedded in an epoxy resin, and the epoxy resin is solidified. The obtained solidified substance is cut with an ultramicrotome device (UltracutUCT manufactured by Leica Microsystems), thereby producing a thin sample having a thickness of 80 nm or more and 130 nm or less. Next, the obtained thin sample is dyed with ruthenium tetroxide in a desiccator at 30°C for 3 hours. By using an ultra-high resolution field emission scanning electron microscope (FE-SEM, S-4800 manufactured by Hitachi High-Tech Corporation.), an SEM image of dyed flake sample is obtained. Since the release agent, the styrene-(meth)acrylic resin, and the polyester resin have different easiness of being dyed with ruthenium tetroxide, each component is identified by shade resulting from the degree of dyeing. In a case where it is difficult to distinguish the light and shade due to the condition of the sample or the like, the staining time is adjusted.

In the cross section of the toner particles, the domain of the colorant is smaller than the domain of the release agent and the domain of the specific resin particles, so that the domains are distinguished by the size.

The average equivalent circle diameter of the domain of the individual specific resin particles is a value measured by the following method.

In the SEM image, 30 toner cross sections having a maximum length of 85% or more of the volume-average particle size of the toner particles are selected, and a total of 100 domains of dyed specific resin particles are observed. The maximum length of each domain is measured, the maximum length is regarded as the diameter of the domain, and the arithmetic average thereof is defined as the average equivalent circle diameter.

Examples of the adjustment of the average equivalent circle diameter of the domain of the specific resin particles include a method of producing the toner particles by aggregation and coalescence and adjusting the volume-average particle size of the specific resin particles contained in the specific resin particle dispersion used in production; and a method of controlling the average equivalent circle diameter by preparing a plurality of specific resin particle dispersions with different volume-average particle sizes and using the specific resin particle dispersions in combination.

The average shape factor SF-1 of the domain of the individual specific resin particles is, for example, preferably 130 or less. In a case where SF-1 is 130 or less, the fixing is not hindered, and the post-processing machine contamination can be prevented.

The average shape factor SF-1 is obtained by the following equation.

$$SF\text{-}1 = (ML/A) \times (\pi/4) \times 100$$

In the above equation, ML represents the absolute maximum length of the toner, and A represents the projected area of the toner.

Specifically, the sample is adjusted in the same manner as the measurement of the average equivalent circle diameter of the domain described above. In the SEM image, 30 toner cross sections having a maximum length of 85% or more of the volume-average particle size of the toner particles are selected, and a total of 100 domains of dyed specific resin particles are observed. The observed SEM image is taken into an image analysis processing system Luzex (manufactured by NIRECO), the maximum length and the projected area of 100 particles are obtained, and the average shape factor is obtained by calculating with the above equation and obtaining the average value thereof.

-Colorant-

Examples of the colorant include various pigments such as carbon black, chrome yellow, Hansa yellow, benzidine yellow, threne yellow, quinoline yellow, pigment yellow, permanent orange GTR, pyrazolone orange, vulcan orange, watch young red, permanent red, brilliant carmine 3B, brilliant carmine 6B, Dupont oil red, pyrazolone red, lithol red, rhodamine B lake, lake red C, pigment red, rose bengal, aniline blue, ultramarine blue, calco oil blue, methylene blue chloride, phthalocyanine blue, pigment blue, phthalocyanine green, and malachite green oxalate; and various dyes such as an acridine-based dye, a xanthene-based dye, an azo-based dye, a benzoquinone-based dye, an azine-based dye, an anthraquinone-based dye, a thioindigo-based dye, a dioxazine-based dye, a thiazine-based dye, an azomethine-based dye, an indigo-based dye, a phthalocyanine-based dye, an aniline black-based dye, a polymethine-based dye, a triphenylmethane-based dye, a diphenylmethane-based dye, and a thiazole-based dye.

One kind of colorant may be used alone, or two or more kinds of colorants may be used in combination.

As the colorant, a colorant having undergone a surface treatment as necessary may be used, or a dispersant may be used in combination with the colorant. Furthermore, a plurality of kinds of colorants may be used in combination.

The content of the colorant with respect to the total mass of the toner particles is, for example, preferably 1% by mass or more and 30% by mass or less, and more preferably 3% by mass or more and 15% by mass or less.

-Release Agent-

Examples of the release agent include hydrocarbon-based wax; natural wax such as carnauba wax, rice wax, and candelilla wax; synthetic or mineral·petroleum-based wax such as montan wax; and ester-based wax such as fatty acid esters and montanic acid esters. The release agent is not limited to the agents.

The melting temperature of the release agent is, for example, preferably 50°C or higher and 110°C or lower, and more preferably 60°C or higher and 100°C or lower.

The melting temperature is determined from a DSC curve obtained by differential scanning calorimetry (DSC) by "peak melting temperature" described in the method for determining the melting temperature in JIS K7121-1987, "Testing methods for transition temperatures of plastics".

The content of the release agent with respect to the total amount of the toner particles is, for example, preferably 1% by mass or more and 20% by mass or less, and more preferably 4% by mass or more and 15% by mass or less.

-Other Additives-

Examples of other additives include well-known additives such as a magnetic material, a charge control agent, and inorganic powder. The additives are incorporated into the toner particles as internal additives.

-Characteristics of Toner Particles and the like-

The toner particles may be toner particles that have a single-layer structure or toner particles having a so-called core/shell structure that is configured with a core portion (core particle) and a coating layer (shell layer) coating the core portion.

The toner particles having a core/shell structure may, for example, be configured with a core portion that is configured with the binder resin, the specific resin particles, and other additives used as necessary, such as a colorant and a release agent, and a coating layer that is configured with a binder resin.

The volume-average particle size (D50v) of the toner particles is, for example, preferably 2 $\mu$m or more and 10 $\mu$m or less, more preferably 4 $\mu$m or more and 8 $\mu$m or less, and even more preferably 4 $\mu$m or more and 7 $\mu$m or less.

The volume-average particle size (D50v) of the toner particles is measured using COULTER MULTISIZER 3 (manufactured by Beckman Coulter, Inc.) and using ISOTON-II (manufactured by Beckman Coulter, Inc.) as an electrolytic solution.

For measurement, a measurement sample in an amount of 0.5 mg or more and 50 mg or less is added to 2 ml of a 5% aqueous solution of a surfactant (for example, preferably sodium alkylbenzene sulfonate) as a dispersant. The obtained solution is added to an electrolytic solution in a volume of 100 ml or more and 150 ml or less.

The electrolytic solution in which the sample is suspended is subjected to a dispersion treatment for 1 minute with an ultrasonic disperser, and the particle size distribution of particles having a particle size in a range of 2 $\mu$m or more and 60 $\mu$m or less is measured using COULTER MULTISIZER 3 with an aperture having an aperture size of 100 $\mu$m. The number of particles to be sampled is 50,000.

The average circularity of the toner particles is, for example, preferably 0.94 or more and 1.00 or less, and more preferably 0.95 or more and 0.98 or less.

The average circularity of the toner particles is determined by (equivalent circular perimeter)/(perimeter) [(perimeter of circle having the same projected area as particle image)/(perimeter of projected particle image)]. Specifically, the average circularity is a value measured by the following method.

First, toner particles as a measurement target are collected by suction, and a flat flow of the particles is formed.

Thereafter, an instant flash of strobe light is emitted to the particles, and the particles are imaged as a still image. By using a flow-type particle image analyzer (FPIA-3000 manufactured by Sysmex Corporation) performing image analysis on the particle image, the average circularity is determined. The number of samplings for determining the average circularity is 4,500.

In a case where a toner contains external additives, the toner (developer) as a measurement target is dispersed in water containing a surfactant, then the dispersion is treated with ultrasonic waves such that the external additives are removed, and the toner particles are collected.

-External Additive-

Examples of the external additive include inorganic particles. Examples of the inorganic particles include $SiO_2$, $TiO_2$, $Al_2O_3$, $CuO$, $ZnO$, $SnO_2$, $CeO_2$, $Fe_2O_3$, $MgO$, $BaO$, $CaO$, $K_2O$, $Na_2O$, $ZrO_2$, $CaO \cdot SiO_2$, $K_2O \cdot (TiO_2)_n$, $Al_2O_3 \cdot 2SiO_2$, $CaCO_3$, $MgCO_3$, $BaSO_4$, and $MgSO_4$.

The surface of the inorganic particles as an external additive may have undergone, for example, a hydrophobic treatment. The hydrophobic treatment is performed, for example, by immersing the inorganic particles in a hydrophobic agent. The hydrophobic agent is not particularly limited, and examples thereof include a silane-based coupling agent, silicone oil, a titanate-based coupling agent, and an aluminum-based coupling agent. One kind of each of the agents may be used alone, or two or more kinds of the agents may be used in combination.

Usually, the amount of the hydrophobic agent is, for example, 1 part by mass or more and 10 parts by mass or less with respect to 100 parts by mass of the inorganic particles.

Examples of external additives also include resin particles (resin particles such as polystyrene, polymethylmethacrylate (PMMA), and melamine resins), a cleaning activator (for example, a metal salt of a higher fatty acid represented by zinc stearate or fluorine-based polymer particles), and the like.

The amount of external additives externally added with respect to the toner particles is, for example, preferably 0.01% by mass or more and 8.0% by mass or less, and more preferably 0.2% by mass or more and 6.0% by mass or less.

(Manufacturing Method of Toner)

Next, the manufacturing method of the toner according to the present exemplary embodiment will be described.

The toner according to the present exemplary embodiment is obtained by manufacturing toner particles and then adding external additives to the exterior of the toner particles as necessary.

The toner particles may be manufactured by any of a dry manufacturing method (for example, a kneading and pulverizing method or the like) or a wet manufacturing method (for example, an aggregation and coalescence method, a suspension polymerization method, a dissolution suspension method, or the like). The manufacturing method of the toner particles is not particularly limited to these manufacturing methods, and a well-known manufacturing method is adopted.

Among the above methods, for example, the aggregation and coalescence method may be used for obtaining toner particles.

Specifically, in a case where the toner particles are manufactured by the aggregation and coalescence method, for example, the toner particles are manufactured through a step of preparing a binder resin particle dispersion in which resin particles to be the binder resin are dispersed and a specific resin particle dispersion to be the specific resin particles (a specific resin particle dispersion-preparing step), a step of allowing the specific resin particles (and other particles as necessary) to be aggregated in the binder resin particle dispersion (in the dispersion after mixing other particle dispersions as necessary) so as to form aggregated particles (aggregated particle-forming step), and a step of heating an aggregated particle dispersion in which the aggregated particles are dispersed to allow the aggregated particles to undergo coalescence and to form toner particles (coalescence step).

Hereinafter, each of the steps will be specifically described.

In the following section, a method for obtaining toner particles containing a colorant and a release agent will be described. The colorant and the release agent are used as necessary. Naturally, other additives different from the colorant and the release agent may also be used.

-Binder Resin Particle Dispersion-Preparing Step-

First, for example, a colorant particle dispersion in which colorant particles are dispersed and a release agent particle dispersion in which release agent particles are dispersed are prepared together with the binder resin particle dispersion in which resin particles to be a binder resin are dispersed.

Here, the binder resin particle dispersion is prepared, for example, by emulsifying the binder resin and dispersing the binder resin in a dispersion medium by adding a surfactant as necessary.

Examples of the dispersion medium used for the binder resin particle dispersion include an aqueous medium.

Examples of the aqueous medium include distilled water, water such as deionized water, alcohols, and the like. One kind of each of the media may be used alone, or two or more kinds of the media may be used in combination.

Examples of the surfactant include an anionic surfactant based on a sulfuric acid ester salt, a sulfonate, a phosphoric acid ester, soap, and the like; a cationic surfactant such as an amine salt-type cationic surfactant and a quaternary ammonium salt-type cationic surfactant; a nonionic surfactant based on polyethylene glycol, an alkylphenol ethylene oxide adduct, and a polyhydric alcohol, and the like. Among these, an anionic surfactant and a cationic surfactant are particularly mentioned. The nonionic surfactant may be used in combination with an anionic surfactant or a cationic surfactant.

One kind of surfactant may be used alone, or two or more kinds of surfactants may be used in combination.

As for the binder resin particle dispersion, examples of the method for dispersing the binder resin particles in the dispersion medium include general dispersion methods such as a rotary shearing homogenizer, a ball mill having media, a sand mill, and a dyno mill. Depending on the type of the binder resin, the binder resin particles may be dispersed in the binder resin particle dispersion by using, for example, a transitional phase inversion emulsification method.

The transitional phase inversion emulsification method is a method of dissolving a resin to be dispersed in a hydrophobic organic solvent in which the resin is soluble, adding a base to an organic continuous phase (O phase) for causing neutralization, and then adding an aqueous medium (W phase), such that the resin undergoes conversion (so-called phase inversion) from W/O to O/W, turns into a discontinuous phase, and is dispersed in the aqueous medium in the form of particles.

The volume-average particle size of the binder resin particles dispersed in the binder resin particle dispersion is, for example, preferably 0.01 $\mu$m or more and 1 $\mu$m or less, more preferably 0.08 $\mu$m or more and 0.8 $\mu$m or less, and even more preferably 0.1 $\mu$m or more and 0.6 $\mu$m or less.

For determining the volume-average particle size of the binder resin particles, a particle size distribution is measured using a laser diffraction type particle size distribution analyzer (for example, LA-700 manufactured by HORIBA, Ltd.), a volume-based cumulative distribution from small-sized particles is drawn for the particle size range (channel) divided using the particle size distribution, and the particle size of particles accounting for cumulative 50% of all particles is measured as a volume-average particle size D50v. For particles in other dispersions, the volume-average particle size is measured in the same manner.

The content of the binder resin particles contained in the binder resin particle dispersion is, for example, preferably 5% by mass or more and 50% by mass or less, and more preferably 10% by mass or more and 45% by mass or less.

For example, a colorant particle dispersion and a release agent particle dispersion are prepared in the same manner as that adopted for preparing the binder resin particle dispersion. That is, the volume-average particle size of the binder resin particles, the dispersion medium, the dispersion method, and the content of the binder resin particles in the binder resin particle dispersion are also applied to the colorant particles to be dispersed in the colorant particle dispersion and the release agent particles to be dispersed in the release agent particle dispersion.

· Preparation of Specific Resin Particle Dispersion

As a method for preparing the resin particle dispersion, for example, a known method such as an emulsion polymerization method, a melt-kneading method using a Banbury mixer or a kneader, a suspension polymerization method, and a spray drying method is adopted. For example, the emulsion polymerization method is preferable in order to unevenly distribute the units derived from the (meth)acrylate monomer on the surface of the particles.

For example, it is preferable to use a styrene-based monomer and a (meth)acrylic acid-based monomer as the monomers and perform the polymerization in the presence of a crosslinking agent.

Furthermore, in manufacturing the specific resin particles, for example, it is preferable to perform emulsion polymerization a plurality of times.

Hereinafter, a method for manufacturing the specific resin particles will be specifically described.

The method for preparing the specific resin particle dispersion preferably includes, for example,

a step of obtaining an emulsion containing a monomer, a crosslinking agent, a surfactant, and water (emulsion preparation step),
a step of adding a polymerization initiator to the emulsion and heating the emulsion so as to polymerize the monomer (first emulsion polymerization step), and
a step of adding an emulsion containing a monomer and a crosslinking agent to a reaction solution obtained after the first emulsion polymerization step and heating the solution so as to polymerize the monomer (second emulsion polymerization step).

Furthermore, in the second emulsion polymerization step, in order to adjust the composition of the surface of the particles, after adjusting the emulsion by changing the ratio of the styrene monomer and the (meth)acrylate monomer, the emulsion may be added a plurality of times.

-Emulsion Preparation Step-

The emulsion preparation step is a step of obtaining an emulsion containing a monomer, a crosslinking agent, a surfactant, and water.

For example, it is preferable to obtain the emulsion by emulsifying a monomer, a crosslinking agent, a surfactant, and water by using an emulsifying machine.

Examples of the emulsifying machine include a rotary stirrer equipped with a propeller type, anchor type, paddle type, or turbine type stirring blade, a stationary mixer such as a static mixer, and a rotor and stator type emulsifying machine such as a homogenizer or Clare mix, a mill type emulsifying machine having grinding function, a high-pressure emulsifying machine such as a Manton-Gaulin-type pressure emulsifying machine, a high-pressure nozzle type emulsifying machine that causes cavitation under high pressure, a high-pressure impact-type emulsifying machine, such as a microfluidizer, that generates shearing force by causing collision of liquids under high pressure, an ultrasonic emulsifying machine that causes cavitation by using ultrasonic waves, and a membrane emulsifying machine that performs uniform emulsification through pores.

As the monomers, for example, it is preferable to use a styrene-based monomer and a (meth)acrylic acid-based monomer.

As the crosslinking agent, the aforementioned crosslinking agent is used.

Examples of the surfactant include an anionic surfactant based on a sulfuric acid ester salt, a sulfonate, a phosphoric acid ester, soap, and the like; a cationic surfactant such as an amine salt-type cationic surfactant and a quaternary ammonium salt-type cationic surfactant; a nonionic surfactant based on polyethylene glycol, an alkylphenol ethylene oxide adduct, and a polyhydric alcohol, and the like. The nonionic surfactant may be used in combination with an anionic surfactant or a cationic surfactant. Among these surfactants, for example, an anionic surfactant is preferable. One kind of surfactant may be used alone, or two or more kinds of surfactants may be used in combination.

The emulsion may contain a chain transfer agent. The chain transfer agent is not particularly limited. As the chain transfer agent, a compound having a thiol component can be used. Specifically, for example, alkyl mercaptans such as hexyl mercaptan, heptyl mercaptan, octyl mercaptan, nonyl mercaptan, decyl mercaptan, and dodecyl mercaptan are preferable.

The mass ratio of the styrene-based monomer to the (meth)acrylic acid-based monomer in the emulsion (styrene-based monomer/(meth)acrylic acid-based monomer) is, for example, preferably 0.2 or more and 1.1 or less.

In addition, the content of the crosslinking agent with respect to the entire emulsion is, for example, preferably 0.5% by mass or more and 3% by mass or less.

-First Emulsion Polymerization Step-

This is a step of adding a polymerization initiator to the emulsion and heating the emulsion so as to polymerize the monomers.

Here, in the polymerization, for example, it is preferable to stir the emulsion (reaction solution) containing the polymerization initiator with a stirrer.

Examples of the stirrer include a rotary stirrer equipped with a propeller type, anchor type, paddle type, or turbine type stirring blade.

As the polymerization initiator, for example, it is preferable to use ammonium persulfate.

-Second Emulsion Polymerization Step-

The step is adding an emulsion containing a monomer to the reaction solution obtained after the first emulsion polymerization step, and heating to polymerize the monomer.

In the polymerization, for example, it is preferable to stir the reaction solution in the same manner as in the first emulsion polymerization step.

In this step, the ratio of the styrene monomer and the (meth)acrylate monomer in the emulsion containing the monomers may be changed, and the emulsion may be added by dividing the emulsion into a plurality of times.

For example, it is preferable to obtain the emulsion containing monomers by emulsifying monomers, a surfactant, and water by using an emulsifying machine.

-Aggregated Particle-Forming Step-

Next, the colorant particle dispersion, the release agent particle dispersion, and the specific resin particle dispersion are mixed together with the binder resin particle dispersion.

Thereafter, in the mixed dispersion, the resin particles, the colorant particles, and the release agent particles are hetero-aggregated such that aggregated particles are formed which have a diameter close to the diameter of the target toner particles and include the resin particles, the colorant particles, and the release agent particles.

Specifically, for example, an aggregating agent is added to the mixed dispersion, the pH of the mixed dispersion is adjusted such that the dispersion is acidic (for example, pH of 2 or higher and 5 or lower), and a dispersion stabilizer is added thereto as necessary. Thereafter, the dispersion is heated to a temperature of the glass transition temperature of the binder resin particles (specifically, for example, to a temperature equal to or higher than the glass transition temperature of the binder resin particles - 30°C and equal to or lower than the glass transition temperature of the binder resin particles - 10°C) such that the particles dispersed in the mixed dispersion are aggregated, thereby forming aggregated particles.

In the aggregated particle-forming step, for example, in a state where the mixed dispersion is stirred with a rotary shearing homogenizer, the aggregating agent may be added thereto at room temperature (for example, 25°C), the pH of the mixed dispersion may be adjusted such that the dispersion is acidic (for example, pH of 2 or higher and 5 or lower), a dispersion stabilizer may be added to the dispersion as necessary, and then the dispersion may be heated.

In this step, by adjusting the temperature of the mixed dispersion in a case of adding the aggregating agent, the dispersion state of the specific resin particles in the obtained toner particles may be controlled. For example, by reducing the temperature of the mixed dispersion, the dispersibility of the specific resin particles is good. The temperature of the mixed dispersion is, for example, in a range of 5°C or higher and 40°C or lower.

In addition, in this step, by adjusting the stirring rate after adding the aggregating agent, the dispersion state of the specific resin particles in the obtained toner particles may be controlled. For example, by increasing the stirring rate after adding the aggregating agent, the dispersibility of the specific resin particles is good.

Examples of the aggregating agent include a surfactant having polarity opposite to the polarity of the surfactant used as a dispersant added to the mixed dispersion, an inorganic metal salt, and a metal complex having a valency of 2 or higher. In particular, in a case where a metal complex is used as the aggregating agent, the amount of the surfactant used is reduced, and the charging characteristics are improved.

An additive that forms a complex or a bond similar to the complex with a metal ion of the aggregating agent may be used as necessary. As such an additive, a chelating agent is used.

Examples of the inorganic metal salt include metal salts such as calcium chloride, calcium nitrate, barium chloride, magnesium chloride, zinc chloride, aluminum chloride, and aluminum sulfate; and inorganic metal salt polymers such as polyaluminum chloride, polyaluminum hydroxide, and calcium polysulfide.

As the chelating agent, a water-soluble chelating agent may also be used. Examples of the chelating agent include oxycarboxylic acids such as tartaric acid, citric acid, and gluconic acid, iminodiacetic acid (IDA), nitrilotriacetic acid (NTA), and ethylenediaminetetraacetic acid (EDTA).

The amount of the chelating agent added with respect to 100 parts by mass of resin particles is, for example, preferably 0.01 parts by mass or more and 5.0 parts by mass or less, and more preferably 0.1 parts by mass or more and less than 3.0 parts by mass.

-Coalescence Step-

The aggregated particle dispersion in which the aggregated particles are dispersed is then heated to, for example, a temperature equal to or higher than the glass transition temperature of the binder resin particles (for example, a temperature higher than the glass transition temperature of the binder resin particles by 10°C to 30°C) such that the aggregated particles coalesce, thereby forming toner particles.

Toner particles are obtained through the above steps.

The toner particles may be manufactured through a step of obtaining an aggregated particle dispersion in which the aggregated particles are dispersed, then mixing the aggregated particle dispersion with a resin particle dispersion in which resin particles are dispersed and another resin particle dispersion in which another resin particles are dispersed so as to cause the resin particles and another resin particles to be aggregated and adhere to the surface of the aggregated particles and to form second aggregated particles, and a step of heating a second aggregated particle dispersion in which the second aggregated particles are dispersed so as to cause the second aggregated particles to be fused and coalesce and to form toner particles having a core/shell structure.

In the step of forming the second aggregated particles, the addition of the resin particle dispersion and the adhesion of the resin particles to the surface of the aggregated particles may be repeated a plurality of times.

After the coalescence step, the toner particles formed in a solution undergo a known washing step, solid-liquid separation step, and drying step, thereby obtaining dry toner particles.

The washing step is not particularly limited. However, in view of charging properties, displacement washing may be thoroughly performed using deionized water. The solid-liquid separation step is not particularly limited. However, in view of productivity, suction filtration, pressure filtration, or the like may be performed. Furthermore, the method of the drying step is not particularly limited. However, in view of productivity, freeze drying, flush drying, fluidized drying, vibratory fluidized drying, or the like may be performed.

For example, by adding an external additive to the obtained dry toner particles and mixing the external additive and the toner particles together, the toner according to the present exemplary embodiment is manufactured. The mixing may be performed, for example, using a V blender, a Henschel mixer, a Lödige mixer, or the like. Furthermore, coarse particles of the toner may be removed as necessary by using a vibratory sieving machine, a pneumatic sieving machine, or the like.

<Electrostatic Charge Image Developer>

The electrostatic charge image developer according to the present exemplary embodiment contains at least the toner according to the present exemplary embodiment or the toner according to the second exemplary embodiment.

The electrostatic charge image developer according to the present exemplary embodiment may be a one-component developer that contains only the toner according to the present exemplary embodiment or the toner according to the second exemplary embodiment or a two-component developer which is obtained by mixing the toner and a carrier together.

The carrier is not particularly limited, and examples thereof include known carriers. Examples of the carrier include a coated carrier obtained by coating the surface of a core material consisting of magnetic powder with a coating resin; a magnetic powder dispersion-type carrier obtained by dispersing magnetic powder in a matrix resin and mixing the powder and the resin together; and a resin impregnation-type carrier obtained by impregnating porous magnetic powder with a resin.

Each of the magnetic powder dispersion-type carrier and the resin impregnation-type carrier may be a carrier obtained by coating a core material, which is particles configuring the carrier, with a coating resin.

Examples of the magnetic powder include magnetic metals such as iron, nickel, and cobalt; and magnetic oxides such as ferrite and magnetite.

Examples of the coating resin and matrix resin include polyethylene, polypropylene, polystyrene, polyvinyl acetate, polyvinyl alcohol, polyvinyl butyral, polyvinyl chloride, polyvinyl ether, polyvinyl ketone, a vinyl chloride-vinyl acetate copolymer, a styrene-acrylic acid ester copolymer, a straight silicone resin configured with an organosiloxane bond, a product obtained by modifying the straight silicone resin, a fluororesin, polyester, polycarbonate, a phenol resin, and an epoxy resin.

The coating resin and the matrix resin may contain other additives such as conductive particles.

Examples of the conductive particles include metals such as gold, silver, and copper, and particles such as carbon black, titanium oxide, zinc oxide, tin oxide, barium sulfate, aluminum borate, and potassium titanate.

The surface of the core material is coated with a coating resin, for example, by a coating method using a solution for forming a coating layer obtained by dissolving the coating resin and various additives, which are used as necessary, in an appropriate solvent, and the like. The solvent is not particularly limited, and may be selected in consideration of the type of the coating resin used, coating suitability, and the like.

Specifically, examples of the resin coating method include an immersion method of immersing the core material in the solution for forming a coating layer; a spray method of spraying the solution for forming a coating layer to the surface of the core material; a fluidized bed method of spraying the solution for forming a coating layer to the core material that is floating by an air flow; and a kneader coater method of mixing the core material of the carrier with the solution for forming a coating layer in a kneader coater and removing solvents.

The mixing ratio (mass ratio) between the toner and the carrier, represented by toner:carrier, in the two-component developer is, for example, preferably 1: 100 to 30:100, and more preferably 3:100 to 20:100.

<Image Forming Apparatus and Image Forming Method>

The image forming apparatus/image forming method according to the present exemplary embodiment will be described.

The image forming apparatus according to the present exemplary embodiment includes an image holder, a charging unit that charges the surface of the image holder, an electrostatic charge image forming unit that forms an electrostatic charge image on the charged surface of the image holder, a developing unit that contains an electrostatic charge image developer and develops the electrostatic charge image formed on the surface of the image holder as a toner image by using the electrostatic charge image developer, a transfer unit that transfers the toner image formed on the surface of the image holder to the surface of a recording medium, and a fixing unit that fixes the toner image transferred to the surface of the recording medium. As the electrostatic charge image developer, the electrostatic charge image developer according to the present exemplary embodiment is used.

In the image forming apparatus according to the present exemplary embodiment, an image forming method (image forming method according to the present exemplary embodiment) is performed which has a charging step of charging the surface of the image holder, an electrostatic charge image forming step of forming an electrostatic charge image on the charged surface of the image holder, a developing step of developing the electrostatic charge image formed on the surface of the image holder as a toner image by using the electrostatic charge image developer according to the present exemplary embodiment, a transfer step of transferring the toner image formed on the surface of the image holder to the surface of a recording medium, and a fixing step of fixing the toner image transferred to the surface of the recording medium.

As the image forming apparatus according to the present exemplary embodiment, known image forming apparatuses are used, such as a direct transfer-type apparatus that transfers a toner image formed on the surface of the image holder directly to a recording medium; an intermediate transfer-type apparatus that performs primary transfer by which the toner image formed on the surface of the image holder is transferred to the surface of an intermediate transfer member and secondary transfer by which the toner image transferred to the surface of the intermediate transfer member is transferred to the surface of a recording medium; an apparatus including a cleaning unit that cleans the surface of the image holder before charging after the transfer of the toner image; and an apparatus including a charge neutralizing unit that neutralizes charge by irradiating the surface of the image holder with charge neutralizing light before charging after the transfer of the toner image.

In the case where the image forming apparatus according to the present exemplary embodiment is the intermediate transfer-type apparatus, for example, a configuration is adopted which has an intermediate transfer member with surface on which the toner image will be transferred, a primary transfer unit that performs primary transfer to transfer the toner image formed on the surface of the image holder to the surface of the intermediate transfer member, and a secondary transfer unit that performs secondary transfer to transfer the toner image transferred to the surface of the intermediate transfer member to the surface of a recording medium.

In the image forming apparatus according to the present exemplary embodiment, for example, a portion including the developing unit may be a cartridge structure (process cartridge) detachable from the image forming apparatus. As the process cartridge, for example, a process cartridge is suitably used which includes a developing unit that contains the electrostatic charge image developer according to the present exemplary embodiment.

An example of the image forming apparatus according to the present exemplary embodiment will be described below, but the present invention is not limited thereto. Hereinafter, among the parts shown in the drawings, main parts will be described, and others will not be described.

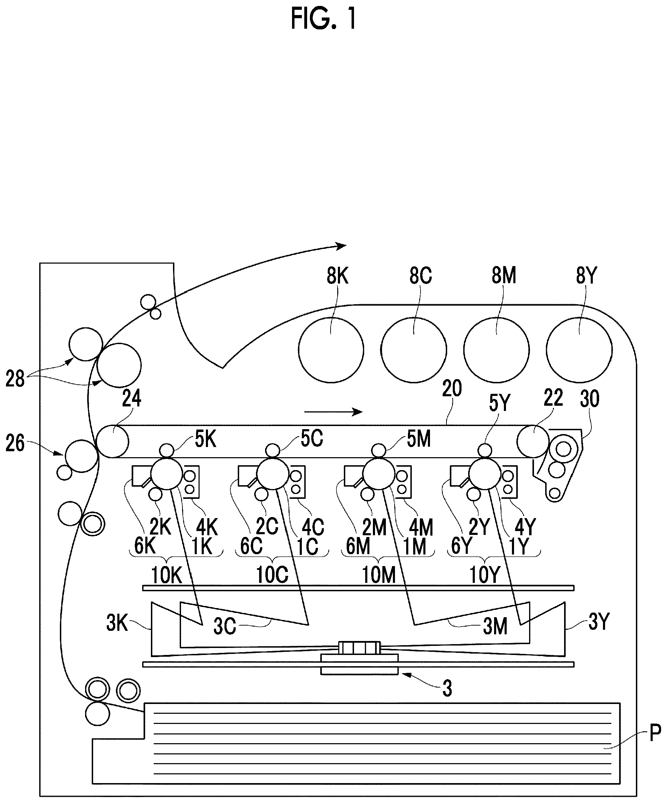

Fig. 1 is a view schematically showing the configuration of the image forming apparatus according to the present exemplary embodiment.

The image forming apparatus shown in Fig. 1 includes first to fourth image forming units 10Y, 10M, 10C, and 10K (image forming means) adopting an electrophotographic method that output images of colors, yellow (Y), magenta (M), cyan (C), and black (K), based on color-separated image data. These image forming units (hereinafter, simply called "units" in some cases) 10Y, 10M, 10C, and 10K are arranged in a row in the horizontal direction in a state of being spaced apart by a predetermined distance. The units 10Y, 10M, 10C, and 10K may be process cartridges that are detachable from the image forming apparatus.

An intermediate transfer belt (an example of the intermediate transfer member) 20 passing through above the units 10Y, 10M, 10C, and 10K extends under the units. The intermediate transfer belt 20 is looped around a driving roll 22 and a support roll 24, that are in contact with an inner surface of the intermediate transfer belt 20, and runs toward the fourth unit 10K from the first unit 10Y. Force is applied to the support roll 24 in a direction away from the driving roll 22 by a spring or the like (not shown in the drawing). Tension is applied to the intermediate transfer belt 20 looped over the two rolls. An intermediate transfer belt cleaning device 30 facing the driving roll 22 is provided on an image holding surface side of the intermediate transfer belt 20.

Yellow, magenta, cyan, and black toners contained in containers of toner cartridges 8Y, 8M, 8C, and 8K are supplied to developing devices (developing units) 4Y, 4M, 4C, and 4K of the units 10Y, 10M, 10C, and 10K, respectively.

The first to fourth units 10Y, 10M, 10C, and 10K have the same configuration and operation. Therefore, in the present specification, as a representative, the first unit 10Y will be described which is placed on the upstream side of the running direction of the intermediate transfer belt and forms a yellow image.

The first unit 10Y has a photoreceptor 1Y that acts as an image holder. Around the photoreceptor 1Y, a charging roll (an example of the charging unit) 2Y that charges the surface of the photoreceptor 1Y at a predetermined potential, an exposure device (an example of the electrostatic charge image forming unit) 3 that exposes the charged surface to a laser beam 3Y based on color-separated image signals to form an electrostatic charge image, a developing device (an example of the developing unit) 4Y that develops the electrostatic charge image by supplying a charged toner to the electrostatic charge image, a primary transfer roll (an example of the primary transfer unit) 5Y that transfers the developed toner image onto the intermediate transfer belt 20, and a photoreceptor cleaning device (an example of the image holder cleaning unit) 6Y that removes the residual toner on the surface of the photoreceptor 1Y after the primary transfer are arranged in this order.

The primary transfer roll 5Y is disposed on the inner side of the intermediate transfer belt 20, at a position facing the photoreceptor 1Y. A bias power supply (not shown in the drawing) for applying a primary transfer bias is connected to primary transfer rolls 5Y, 5M, 5C, and 5K of each unit. Each bias power supply changes the transfer bias applied to each primary transfer roll under the control of a control unit not shown in the drawing.

Hereinafter, the operation that the first unit 10Y carries out to form a yellow image will be described.

First, prior to the operation, the surface of the photoreceptor 1Y is charged to a potential of -600 V to -800 V by the charging roll 2Y

The photoreceptor 1Y is formed of a photosensitive layer laminated on a conductive (for example, volume resistivity at 20°C: $1 \times 10^{-6}$ $\Omega \cdot$cm or less) substrate. The photosensitive layer has properties in that although this layer usually has a high resistance (resistance of a general resin), in a case where the photosensitive layer is irradiated with the laser beam, the specific resistance of the portion irradiated with the laser beam changes. From the exposure device 3, the laser beam 3Y is radiated to the surface of the charged photoreceptor 1Y according to the image data for yellow transmitted from the control unit not shown in the drawing. As a result, an electrostatic charge image of the yellow image pattern is formed on the surface of the photoreceptor 1Y.

The electrostatic charge image is an image formed on the surface of the photoreceptor 1Y by charging. This image is a so-called negative latent image formed in a manner in which the charges with which the surface of the photoreceptor 1Y is charged flow due to the reduction in the specific resistance of the portion of the photosensitive layer irradiated with the laser beam 3Y, but the charges in a portion not being irradiated with the laser beam 3Y remain.

The electrostatic charge image formed on the photoreceptor 1Y rotates to a predetermined development position as the photoreceptor 1Y runs. At the development position, the electrostatic charge image on the photoreceptor 1Y is developed as a toner image by the developing device 4Y and visualized.

The developing device 4Y contains, for example, an electrostatic charge image developer that contains at least a yellow toner and a carrier. By being agitated in the developing device 4Y, the yellow toner undergoes triboelectrification, carries charges of the same polarity (negative polarity) as the charges with which the surface of the photoreceptor 1Y is charged, and is held on a developer roll (an example of a developer holder). As the surface of the photoreceptor 1Y passes through the developing device 4Y, the yellow toner electrostatically adheres to the neutralized latent image portion on the surface of the photoreceptor 1Y, and the latent image is developed by the yellow toner. The photoreceptor 1Y on which the yellow toner image is formed keeps on running at a predetermined speed, and the toner image developed on the photoreceptor 1Y is transported to a predetermined primary transfer position.

In a case where the yellow toner image on the photoreceptor 1Y is transported to the primary transfer position, a primary transfer bias is applied to the primary transfer roll 5Y, and electrostatic force heading for the primary transfer roll 5Y from the photoreceptor 1Y acts on the toner image. As a result, the toner image on the photoreceptor 1Y is transferred onto the intermediate transfer belt 20. The transfer bias applied at this time has a polarity (+) opposite to the polarity (-) of the toner. In the first unit 10Y, the transfer bias is set, for example, to +10 $\mu$A under the control of the control unit (not shown in the drawing).

On the other hand, the residual toner on the photoreceptor 1Y is removed by a photoreceptor cleaning device 6Y and collected.

The primary transfer bias applied to the primary transfer rolls 5M, 5C, and 5K following the second unit 10M is also controlled according to the first unit.

In this way, the intermediate transfer belt 20 to which the yellow toner image is transferred in the first unit 10Y is sequentially transported through the second to fourth units 10M, 10C, and 10K, and the toner images of each color are superimposed and transferred in layers.

The intermediate transfer belt 20, to which the toner images of four colors are transferred in layers through the first to fourth units, reaches a secondary transfer portion configured with the intermediate transfer belt 20, the support roll 24 in contact with the inner surface of the intermediate transfer belt, and a secondary transfer roll 26 (an example of a secondary transfer unit) disposed on the image holding surface side of the intermediate transfer belt 20. On the other hand, through a supply mechanism, recording paper P (an example of recording medium) is supplied at a predetermined timing to the gap between the secondary transfer roll 26 and the intermediate transfer belt 20 that are in contact with each other. Furthermore, secondary transfer bias is applied to the support roll 24. The transfer bias applied at this time has the same polarity (-) as the polarity (-) of the toner. The electrostatic force heading for the recording paper P from the intermediate transfer belt 20 acts on the toner image, that makes the toner image on the intermediate transfer belt 20 transferred onto the recording paper P. The secondary transfer bias to be applied at this time is determined according to the resistance detected by a resistance detecting unit (not shown in the drawing) for detecting the resistance of the secondary transfer portion, and the voltage thereof is controlled.

The recording paper P on which the toner image has been transferred is transported into a pressure contact portion (nip portion) of a pair of fixing rolls in the fixing device 28 (an example of fixing unit), the toner image is fixed to the surface of the recording paper P, and a fixed image is formed. The recording paper P on which the colored image has been fixed is transported to an output portion, and a series of colored image forming operations is finished.

Examples of the recording paper P to which the toner image is to be transferred include plain paper used in electrophotographic copy machines, printers, and the like. Examples of the recording medium also include an OHP sheet, in addition to the recording paper P.

In order to further improve the smoothness of the image surface after fixing, for example, it is preferable that the surface of the recording paper P is also smooth. For example, coated paper prepared by coating the surface of plain paper with a resin or the like, art paper for printing, and the like are suitably used.

<Process Cartridge/Toner Cartridge>

The process cartridge according to the present exemplary embodiment will be described.

The process cartridge according to the present exemplary embodiment includes a developing unit that contains the electrostatic charge image developer according to the present exemplary embodiment and develops an electrostatic charge image formed on the surface of an image holder as a toner image by using the electrostatic charge image developer. The process cartridge is detachable from the image forming apparatus.

The process cartridge according to the present exemplary embodiment may be configured with a developing unit and, for example, at least one member selected from an image holder, a charging unit, an electrostatic charge image forming unit, or a transfer unit, as necessary.

An example of the process cartridge according to the present exemplary embodiment will be shown below, but the present invention is not limited thereto. Hereinafter, among the parts shown in the drawings, main parts will be described, and others will not be described.

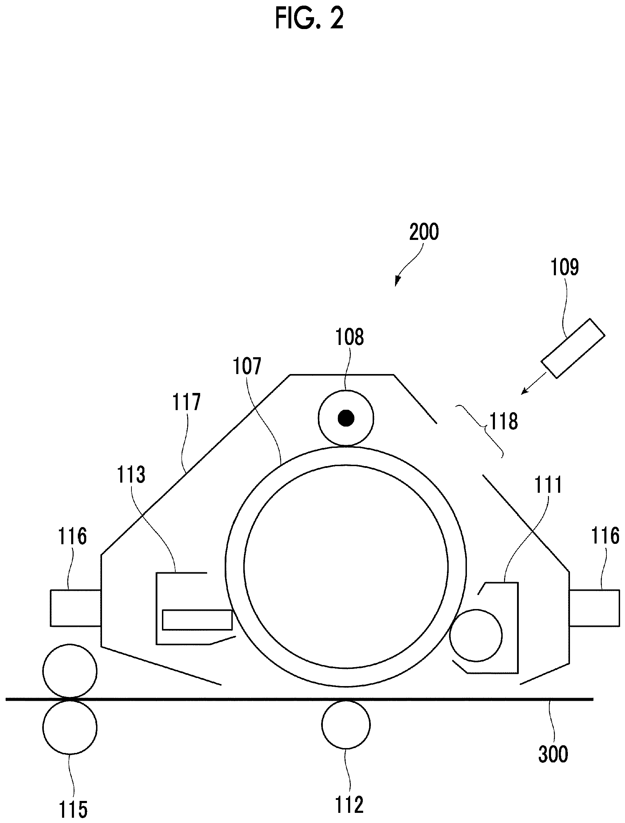

Fig. 2 is a view schematically showing an example of the configuration of the process cartridge according to the present exemplary embodiment.

A process cartridge 200 shown in Fig. 2 is configured, for example, with a housing 117 that includes mounting rails 116 and an opening portion 118 for exposure, a photoreceptor 107 (an example of image holder), a charging roll 108 (an example of charging unit) that is provided on the periphery of the photoreceptor 107, a developing device 111 (an example of developing unit), a photoreceptor cleaning device 113 (an example of image holder cleaning unit), that are integrally combined and held in the housing 117. The process cartridge 200 forms a cartridge in this way.

In Fig. 2, 109 represents an exposure device (an example of electrostatic charge image forming unit), 112 represents a transfer device (an example of transfer unit), 115 represents a fixing device (an example of fixing unit), and 300 represents recording paper (an example of recording medium).

Next, the toner cartridge according to the present exemplary embodiment will be described.

The toner cartridge according to the present exemplary embodiment is a toner cartridge including a container that contains the toner according to the present exemplary embodiment and is detachable from the image forming apparatus. The toner cartridge includes a container that contains a replenishing toner to be supplied to the developing unit provided in the image forming apparatus.

The image forming apparatus shown in Fig. 1 is an image forming apparatus having a configuration that enables toner cartridges 8Y, 8M, 8C, and 8K to be detachable from the apparatus. The developing devices 4Y, 4M, 4C, and 4K are connected to toner cartridges corresponding to the respective developing devices (colors) by a toner supply pipe not shown in the drawing. In addition, in a case where the amount of the toner contained in the container of the toner cartridge is low, the toner cartridge is replaced.

Examples

Hereinafter, exemplary embodiments of the invention will be specifically described based on examples. However, the exemplary embodiments of the invention are not limited to the examples. In the following description, unless otherwise specified, "parts" and "%" are based on mass.

[Preparation of Emulsions (1-1 to 1-4)]

<Emulsion (1-1)>

· Styrene: 60 parts

· n-Butyl acrylate: 38.5 parts
· 1,10-Decanediol diacrylate: 1.5 parts
· Anionic surfactant (ELEMINOL MON-2, manufactured by Sanyo Chemical Industries, Ltd.): 1.2 parts
· Deionized water: 98.8 parts

The above-described materials are added to a mixing vessel equipped with a stirrer, and stirred to prepare an emulsion (1-1).

<Emulsion (1-2)>

· Styrene: 55 parts
· n-Butyl acrylate: 43.5 parts
· 1,10-Decanediol diacrylate: 1.5 parts
· Anionic surfactant (ELEMINOL MON-2): 1.2 parts
· Deionized water: 98.8 parts

The above-described materials are added to a mixing vessel equipped with a stirrer, and stirred to prepare an emulsion (1-2).

<Emulsion (1-3)>

· Styrene: 45 parts
· n-Butyl acrylate: 53.5 parts
· 1,10-Decanediol diacrylate: 1.5 parts
· Anionic surfactant (ELEMINOL MON-2): 1.2 parts
· Deionized water: 98.8 parts

The above-described materials are added to a mixing vessel equipped with a stirrer, and stirred to prepare an emulsion (1-3).

<Emulsion (1-4)>

· Styrene: 40 parts
· n-Butyl acrylate: 58.5 parts
· 1,10-Decanediol diacrylate: 1.5 parts
· Anionic surfactant (ELEMINOL MON-2): 1.2 parts
· Deionized water: 98.8 parts

The above-described materials are added to a mixing vessel equipped with a stirrer, and stirred to prepare an emulsion (1-4).

[Preparation of Styrene-(Meth)acrylate Copolymer Particle Dispersion (1)]

1.1 parts of an anionic surfactant (ELEMINOL MON-2) and 400 parts of deionized water are added to a reaction vessel equipped with a stirrer and a nitrogen introduction tube, after replacing the inside of the reaction vessel with nitrogen. The reaction solution is heated in an oil bath while being stirred so that the temperature of the reaction solution is set to 70°C. After adding 10 parts of the emulsion (1-1) thereto, 20 parts of an ammonium persulfate aqueous solution in which a concentration is adjusted to 10% by mass is further added thereto, and the reaction solution is retained for 30 minutes.

Thereafter, in a state where the temperature of the reaction solution is maintained at 70°C, 190 parts of the emulsion (1-1) is gradually added dropwise to the reaction vessel over 30 minutes by a pump. 200 parts of the emulsion (1-2) is further added dropwise thereto over 30 minutes. Subsequently, 200 parts of the emulsion (1-3) is added dropwise thereto over 40 minutes, and then 200 parts of the emulsion (1-4) is added dropwise thereto over 40 minutes.

After completion of the dropwise addition, the solution is retained for 60 minutes, 2 parts of ammonium persulfate having a concentration of 10% by mass is added thereto, and the mixture is retained for another 3 hours and then cooled to room temperature. Thereafter, deionized water and nitric acid are added thereto so that the concentration of solid content is 20% by mass, thereby preparing a styrene-(meth)acrylate copolymer particle dispersion (1).

The volume-average particle size of the obtained resin particles is 165 nm. In addition, the glass transition temperature measured with a differential scanning calorimeter is 17°C.

[Preparation of Styrene-(Meth)acrylate Copolymer Particle Dispersion (2)]

[Preparation of Emulsions (2-1 to 2-4)]

<Emulsion (2-1)>

· Styrene: 52 parts
· n-Butyl acrylate: 46.5 parts
· 1,10-Decanediol diacrylate: 1.5 parts
· Anionic surfactant (ELEMINOL MON-2, manufactured by Sanyo Chemical Industries, Ltd.): 1.2 parts
· Deionized water: 98.8 parts

The above-described materials are added to a mixing vessel equipped with a stirrer, and stirred to prepare an emulsion (2-1).

<Emulsion (2-2)>

· Styrene: 51 parts
· n-Butyl acrylate: 47.5 parts
· 1,10-Decanediol diacrylate: 1.5 parts
· Anionic surfactant (ELEMINOL MON-2, manufactured by Sanyo Chemical Industries, Ltd.): 1.2 parts
· Deionized water: 98.8 parts

The above-described materials are added to a mixing vessel equipped with a stirrer, and stirred to prepare an emulsion (2-2).

<Emulsion (2-3)>

· Styrene: 49 parts
· n-Butyl acrylate: 49.5 parts
· 1,10-Decanediol diacrylate: 1.5 parts
· Anionic surfactant (ELEMINOL MON-2, manufactured by Sanyo Chemical Industries, Ltd.): 1.2 parts
· Deionized water: 98.8 parts

The above-described materials are added to a mixing vessel equipped with a stirrer, and stirred to prepare an emulsion (2-3).

<Emulsion (2-4)>

· Styrene: 47 parts
· n-Butyl acrylate: 51.5 parts
· 1,10-Decanediol diacrylate: 1.5 parts

· Anionic surfactant (ELEMINOL MON-2, manufactured by Sanyo Chemical Industries, Ltd.): 1.2 parts
· Deionized water: 98.8 parts

The above-described materials are added to a mixing vessel equipped with a stirrer, and stirred to prepare an emulsion (2-4).

A styrene-(meth)acrylate copolymer particle dispersion (2) is prepared in the same manner as in the preparation of the styrene-(meth)acrylate copolymer particle dispersion (1), except that the emulsion (1-1) is changed to the emulsion (2-1), the emulsion (1-2) is changed to the emulsion (2-2), the emulsion (1-3) is changed to the emulsion (2-3), and the emulsion (1-4) is changed to the emulsion (2-4).

The volume-average particle size of the obtained resin particles is 170 nm. In addition, the glass transition temperature measured with a differential scanning calorimeter is 9°C.

[Preparation of Styrene-(Meth)acrylate Copolymer Particle Dispersion (3)]

[Preparation of Emulsions (3-1 to 3-4)]

<Emulsion (3-1)>

· Styrene: 53 parts
· n-Butyl acrylate: 45.5 parts
· 1,10-Decanediol diacrylate: 1.5 parts
· Anionic surfactant (ELEMINOL MON-2, manufactured by Sanyo Chemical Industries, Ltd.): 1.2 parts
· Deionized water: 98.8 parts

The above-described materials are added to a mixing vessel equipped with a stirrer, and stirred to prepare an emulsion (3-1).

<Emulsion (3-2)>

· Styrene: 51 parts
· n-Butyl acrylate: 47.5 parts
· 1,10-Decanediol diacrylate: 1.5 parts
· Anionic surfactant (ELEMINOL MON-2, manufactured by Sanyo Chemical Industries, Ltd.): 1.2 parts
· Deionized water: 98.8 parts

The above-described materials are added to a mixing vessel equipped with a stirrer, and stirred to prepare an emulsion (3-2).

<Emulsion (3-3)>

· Styrene: 49 parts
· n-Butyl acrylate: 49.5 parts
· 1,10-Decanediol diacrylate: 1.5 parts
· Anionic surfactant (ELEMINOL MON-2, manufactured by Sanyo Chemical Industries, Ltd.): 1.2 parts
· Deionized water: 98.8 parts

The above-described materials are added to a mixing vessel equipped with a stirrer, and stirred to prepare an emulsion (3-3).

<Emulsion (3-4)>

· Styrene: 47 parts
· n-Butyl acrylate: 51.5 parts
· 1,10-Decanediol diacrylate: 1.5 parts
· Anionic surfactant (ELEMINOL MON-2, manufactured by Sanyo Chemical Industries, Ltd.): 1.2 parts
· Deionized water: 98.8 parts

The above-described materials are added to a mixing vessel equipped with a stirrer, and stirred to prepare an emulsion (3-4).

A styrene-(meth)acrylate copolymer particle dispersion (3) is prepared in the same manner as in the preparation of the styrene-(meth)acrylate copolymer particle dispersion (1), except that the emulsion (1-1) is changed to the emulsion (3-1), the emulsion (1-2) is changed to the emulsion (3-2), the emulsion (1-3) is changed to the emulsion (3-3), and the emulsion (1-4) is changed to the emulsion (3-4).

The volume-average particle size of the obtained resin particles is 160 nm. In addition, the glass transition temperature measured with a differential scanning calorimeter is 12°C.

[Preparation of Styrene-(Meth)acrylate Copolymer Particle Dispersion (4)]

[Preparation of Emulsions (4-1 to 4-4)]

<Emulsion (4-1)>

· Styrene: 63 parts
· n-Butyl acrylate: 35.5 parts
· 1,10-Decanediol diacrylate: 1.5 parts
· Anionic surfactant (ELEMINOL MON-2, manufactured by Sanyo Chemical Industries, Ltd.): 1.2 parts
· Deionized water: 98.8 parts

The above-described materials are added to a mixing vessel equipped with a stirrer, and stirred to prepare an emulsion (4-1).

<Emulsion (4-2)>

· Styrene: 52 parts
· n-Butyl acrylate: 46.5 parts
· 1,10-Decanediol diacrylate: 1.5 parts
· Anionic surfactant (ELEMINOL MON-2, manufactured by Sanyo Chemical Industries, Ltd.): 1.2 parts
· Deionized water: 98.8 parts

The above-described materials are added to a mixing vessel equipped with a stirrer, and stirred to prepare an emulsion (4-2).

<Emulsion (4-3)>

· Styrene: 45 parts
· n-Butyl acrylate: 53.5 parts
· 1,10-Decanediol diacrylate: 1.5 parts
· Anionic surfactant (ELEMINOL MON-2, manufactured by Sanyo Chemical Industries, Ltd.): 1.2 parts
· Deionized water: 98.8 parts

The above-described materials are added to a mixing vessel equipped with a stirrer, and stirred to prepare an emulsion (4-3).

<Emulsion (4-4)>

· Styrene: 40 parts
· n-Butyl acrylate: 58.5 parts
· 1,10-Decanediol diacrylate: 1.5 parts
· Anionic surfactant (ELEMINOL MON-2, manufactured by Sanyo Chemical Industries, Ltd.): 1.2 parts
· Deionized water: 98.8 parts

The above-described materials are added to a mixing vessel equipped with a stirrer, and stirred to prepare an emulsion (4-4).

A styrene-(meth)acrylate copolymer particle dispersion (4) is prepared in the same manner as in the preparation of the styrene-(meth)acrylate copolymer particle dispersion (1), except that the emulsion (1-1) is changed to the emulsion (4-1), the emulsion (1-2) is changed to the emulsion (4-2), the emulsion (1-3) is changed to the emulsion (4-3), and the emulsion (1-4) is changed to the emulsion (4-4).

The volume-average particle size of the obtained resin particles is 170 nm. In addition, the glass transition temperature measured with a differential scanning calorimeter is 17°C.

[Preparation of Styrene-(Meth)acrylate Copolymer Particle Dispersion (5)]

[Preparation of Emulsions (5-1 to 5-4)]

<Emulsion (5-1)>

· Styrene: 66 parts
· n-Butyl acrylate: 32.5 parts
· 1,10-Decanediol diacrylate: 1.5 parts
· Anionic surfactant (ELEMINOL MON-2, manufactured by Sanyo Chemical Industries, Ltd.): 1.2 parts
· Deionized water: 98.8 parts

The above-described materials are added to a mixing vessel equipped with a stirrer, and stirred to prepare an emulsion (5-1).

<Emulsion (5-2)>

· Styrene: 52 parts
· n-Butyl acrylate: 46.5 parts
· 1,10-Decanediol diacrylate: 1.5 parts
· Anionic surfactant (ELEMINOL MON-2, manufactured by Sanyo Chemical Industries, Ltd.): 1.2 parts
· Deionized water: 98.8 parts

The above-described materials are added to a mixing vessel equipped with a stirrer, and stirred to prepare an emulsion (5-2).

<Emulsion (5-3)>

· Styrene: 42 parts
· n-Butyl acrylate: 56.5 parts
· 1,10-Decanediol diacrylate: 1.5 parts
· Anionic surfactant (ELEMINOL MON-2, manufactured by Sanyo Chemical Industries, Ltd.): 1.2 parts
· Deionized water: 98.8 parts

The above-described materials are added to a mixing vessel equipped with a stirrer, and stirred to prepare an emulsion (5-3).

<Emulsion (5-4)>

· Styrene: 40 parts
· n-Butyl acrylate: 58.5 parts
· 1,10-Decanediol diacrylate: 1.5 parts
· Anionic surfactant (ELEMINOL MON-2, manufactured by Sanyo Chemical Industries, Ltd.): 1.2 parts
· Deionized water: 98.8 parts

The above-described materials are added to a mixing vessel equipped with a stirrer, and stirred to prepare an emulsion (5-4).

A styrene-(meth)acrylate copolymer particle dispersion (5) is prepared in the same manner as in the preparation of the styrene-(meth)acrylate copolymer particle dispersion (1), except that the emulsion (1-1) is changed to the emulsion (5-1), the emulsion (1-2) is changed to the emulsion (5-2), the emulsion (1-3) is changed to the emulsion (5-3), and the emulsion (1-4) is changed to the emulsion (5-4).

The volume-average particle size of the obtained resin particles is 170 nm. In addition, the glass transition temperature measured with a differential scanning calorimeter is 22°C.

[Preparation of Styrene-(Meth)acrylate Copolymer Particle Dispersion (6)]

[Preparation of Emulsions (6-1 to 6-4)]

<Emulsion (6-1)>

· Styrene: 58 parts
· n-Butyl acrylate: 40.5 parts
· 1,10-Decanediol diacrylate: 1.5 parts
· Anionic surfactant (ELEMINOL MON-2, manufactured by Sanyo Chemical Industries, Ltd.): 1.2 parts
· Deionized water: 98.8 parts

The above-described materials are added to a mixing vessel equipped with a stirrer, and stirred to prepare an emulsion (6-1).

<Emulsion (6-2)>

· Styrene: 49 parts
· n-Butyl acrylate: 49.5 parts
· 1,10-Decanediol diacrylate: 1.5 parts
· Anionic surfactant (ELEMINOL MON-2, manufactured by Sanyo Chemical Industries, Ltd.): 1.2 parts
· Deionized water: 98.8 parts

The above-described materials are added to a mixing vessel equipped with a stirrer, and stirred to prepare an emulsion (6-2).

<Emulsion (6-3)>

· Styrene: 48 parts
· n-Butyl acrylate: 50.5 parts

· 1,10-Decanediol diacrylate: 1.5 parts
· Anionic surfactant (ELEMINOL MON-2, manufactured by Sanyo Chemical Industries, Ltd.): 1.2 parts
· Deionized water: 98.8 parts

The above-described materials are added to a mixing vessel equipped with a stirrer, and stirred to prepare an emulsion (6-3).

<Emulsion (6-4)>

· Styrene: 47 parts
· n-Butyl acrylate: 51.5 parts
· 1,10-Decanediol diacrylate: 1.5 parts
· Anionic surfactant (ELEMINOL MON-2, manufactured by Sanyo Chemical Industries, Ltd.): 1.2 parts
· Deionized water: 98.8 parts

The above-described materials are added to a mixing vessel equipped with a stirrer, and stirred to prepare an emulsion (6-4).

A styrene-(meth)acrylate copolymer particle dispersion (6) is prepared in the same manner as in the preparation of the styrene-(meth)acrylate copolymer particle dispersion (1), except that the emulsion (1-1) is changed to the emulsion (6-1), the emulsion (1-2) is changed to the emulsion (6-2), the emulsion (1-3) is changed to the emulsion (6-3), and the emulsion (1-4) is changed to the emulsion (6-4).

The volume-average particle size of the obtained resin particles is 160 nm. In addition, the glass transition temperature measured with a differential scanning calorimeter is 18°C.

[Preparation of Styrene-(Meth)acrylate Copolymer Particle Dispersion (7)]

[Preparation of Emulsions (7-1 and 7-2)]

<Emulsion (7-1)>

· Styrene: 51 parts
· n-Butyl acrylate: 47.5 parts
· 1,10-Decanediol diacrylate: 1.5 parts
· Anionic surfactant (ELEMINOL MON-2, manufactured by Sanyo Chemical Industries, Ltd.): 1.2 parts
· Deionized water: 98.8 parts

The above-described materials are added to a mixing vessel equipped with a stirrer, and stirred to prepare an emulsion (7-1).

<Emulsion (7-2)>

· Styrene: 144.0 parts
· n-Butyl acrylate: 151.5 parts
· 1,10-Decanediol diacrylate: 4.5 parts
· Anionic surfactant (ELEMINOL MON-2, manufactured by Sanyo Chemical Industries, Ltd.): 3.6 parts
· Deionized water: 296.4 parts

The above-described materials are added to a mixing vessel equipped with a stirrer, and stirred to prepare an emulsion (7-2).

1.1 parts of an anionic surfactant (ELEMINOL MON-2) and 400 parts of deionized water are added to a reaction vessel equipped with a stirrer and a nitrogen introduction tube, after replacing the inside of the reaction vessel with nitrogen. The reaction solution is heated in an oil bath while being stirred so that the temperature of the reaction solution is set to 70°C. After adding 10 parts of the emulsion (7-1) thereto, 20 parts of an ammonium persulfate aqueous solution in which a concentration is adjusted to 10% by mass is further added thereto, and the reaction solution is retained for 30 minutes. Thereafter, in a state where the temperature of the reaction solution is maintained at 70°C, 190 parts of the emulsion (7-1) is gradually added dropwise to the reaction vessel over 30 minutes by a pump. 600 parts of the emulsion (7-2) is further added dropwise thereto over 100 minutes.

After completion of the dropwise addition, the solution is retained for 60 minutes, 2 parts of ammonium persulfate having a concentration of 10% by mass is added thereto, and the mixture is retained for another 3 hours and then cooled to room temperature. Thereafter, deionized water and nitric acid are added thereto so that the concentration of solid content is 20% by mass, thereby preparing a styrene-(meth)acrylate copolymer particle dispersion (7).

The volume-average particle size of the obtained resin particles is 170 nm. In addition, the glass transition temperature measured with a differential scanning calorimeter is 7°C.

[Preparation of Styrene-(Meth)acrylate Copolymer Particle Dispersion (8)]

[Preparation of Emulsions (8-1 to 8-4)]

<Emulsion (8-1)>

· Styrene: 60 parts
· n-Butyl acrylate: 38.5 parts
· 1,10-Decanediol diacrylate: 1.5 parts
· Anionic surfactant (ELEMINOL MON-2, manufactured by Sanyo Chemical Industries, Ltd.): 1.2 parts
· Deionized water: 98.8 parts

The above-described materials are added to a mixing vessel equipped with a stirrer, and stirred to prepare an emulsion (8-1).

<Emulsion (8-2)>

· Styrene: 59.5 parts
· n-Butyl acrylate: 38 parts
· 1,10-Decanediol diacrylate: 1.5 parts
· Anionic surfactant (ELEMINOL MON-2, manufactured by Sanyo Chemical Industries, Ltd.): 1.2 parts
· Deionized water: 98.8 parts

The above-described materials are added to a mixing vessel equipped with a stirrer, and stirred to prepare an emulsion (8-2).

<Emulsion (8-3)>

· Styrene: 55 parts
· n-Butyl acrylate: 43.5 parts
· 1,10-Decanediol diacrylate: 1.5 parts
· Anionic surfactant (ELEMINOL MON-2, manufactured by Sanyo Chemical Industries, Ltd.): 1.2 parts
· Deionized water: 98.8 parts

The above-described materials are added to a mixing vessel equipped with a stirrer, and stirred to prepare an emulsion (8-3).

<Emulsion (8-4)>

· Styrene: 53 parts
· n-Butyl acrylate: 45.5 parts
· 1,10-Decanediol diacrylate: 1.5 parts
· Anionic surfactant (ELEMINOL MON-2, manufactured by Sanyo Chemical Industries, Ltd.): 1.2 parts
· Deionized water: 98.8 parts

The above-described materials are added to a mixing vessel equipped with a stirrer, and stirred to prepare an emulsion (8-4).

A styrene-(meth)acrylate copolymer particle dispersion (8) is prepared in the same manner as in the preparation of the styrene-(meth)acrylate copolymer particle dispersion (1), except that the emulsion (1-1) is changed to the emulsion (8-1), the emulsion (1-2) is changed to the emulsion (8-2), the emulsion (1-3) is changed to the emulsion (8-3), and the emulsion (1-4) is changed to the emulsion (8-4).

The volume-average particle size of the obtained resin particles is 165 nm. In addition, the glass transition temperature measured with a differential scanning calorimeter is 12°C.

[Preparation of Styrene-(Meth)acrylate Copolymer Particle Dispersion (9)]

[Preparation of Emulsions (9-1 to 9-4)]

<Emulsion (9-1)>

· Styrene: 60 parts
· n-Butyl acrylate: 38.5 parts
· 1,10-Decanediol diacrylate: 1.5 parts
· Anionic surfactant (ELEMINOL MON-2, manufactured by Sanyo Chemical Industries, Ltd.): 1.2 parts
· Deionized water: 98.8 parts

The above-described materials are added to a mixing vessel equipped with a stirrer, and stirred to prepare an emulsion (9-1).

<Emulsion (9-2)>

· Styrene: 55 parts
· n-Butyl acrylate: 43.5 parts
· 1,10-Decanediol diacrylate: 1.5 parts
· Anionic surfactant (ELEMINOL MON-2, manufactured by Sanyo Chemical Industries, Ltd.): 1.2 parts
· Deionized water: 98.8 parts

The above-described materials are added to a mixing vessel equipped with a stirrer, and stirred to prepare an emulsion (9-2).

<Emulsion (9-3)>

· Styrene: 54 parts
· n-Butyl acrylate: 44.5 parts
· 1,10-Decanediol diacrylate: 1.5 parts
· Anionic surfactant (ELEMINOL MON-2, manufactured by Sanyo Chemical Industries, Ltd.): 1.2 parts
· Deionized water: 98.8 parts

The above-described materials are added to a mixing vessel equipped with a stirrer, and stirred to prepare an emulsion (9-3).

<Emulsion (9-4)>

· Styrene: 48.5 parts
· n-Butyl acrylate: 50 parts
· 1,10-Decanediol diacrylate: 1.5 parts
· Anionic surfactant (ELEMINOL MON-2, manufactured by Sanyo Chemical Industries, Ltd.): 1.2 parts
· Deionized water: 98.8 parts

The above-described materials are added to a mixing vessel equipped with a stirrer, and stirred to prepare an emulsion (9-4).
A styrene-(meth)acrylate copolymer particle dispersion (9) is prepared in the same manner as in the preparation of the styrene-(meth)acrylate copolymer particle dispersion (1), except that the emulsion (1-1) is changed to the emulsion (9-1), the emulsion (1-2) is changed to the emulsion (9-2), the emulsion (1-3) is changed to the emulsion (9-3), and the emulsion (1-4) is changed to the emulsion (9-4).
The volume-average particle size of the obtained resin particles is 160 nm. In addition, the glass transition temperature measured with a differential scanning calorimeter is 13°C.

[Preparation of Styrene-(Meth)acrylate Copolymer Particle Dispersion (10)]

[Preparation of Emulsions (10-1 to 10-4)]

<Emulsion (10-1)>

· Styrene: 40 parts
· Ethyl acrylate: 58.5 parts
· 1,10-Decanediol diacrylate: 1.5 parts
· Anionic surfactant (ELEMINOL MON-2, manufactured by Sanyo Chemical Industries, Ltd.): 1.2 parts
· Deionized water: 98.8 parts

The above-described materials are added to a mixing vessel equipped with a stirrer, and stirred to prepare an emulsion (10-1).

<Emulsion (10-2)>

· Styrene: 35 parts
· Ethyl acrylate: 63.5 parts
· 1,10-Decanediol diacrylate: 1.5 parts
· Anionic surfactant (ELEMINOL MON-2, manufactured by Sanyo Chemical Industries, Ltd.): 1.2 parts
· Deionized water: 98.8 parts

The above-described materials are added to a mixing vessel equipped with a stirrer, and stirred to prepare an emulsion (10-2).

<Emulsion (10-3)>

· Styrene: 32 parts
· Ethyl acrylate: 66.5 parts
· 1,10-Decanediol diacrylate: 1.5 parts
· Anionic surfactant (ELEMINOL MON-2, manufactured by Sanyo Chemical Industries, Ltd.): 1.2 parts
· Deionized water: 98.8 parts

The above-described materials are added to a mixing vessel equipped with a stirrer, and stirred to prepare an emulsion (10-3).

<Emulsion (10-4)>

· Styrene: 31.5 parts
· Ethyl acrylate: 67 parts
· 1,10-Decanediol diacrylate: 1.5 parts
· Anionic surfactant (ELEMINOL MON-2, manufactured by Sanyo Chemical Industries, Ltd.): 1.2 parts
· Deionized water: 98.8 parts

The above-described materials are added to a mixing vessel equipped with a stirrer, and stirred to prepare an emulsion (10-4).

A styrene-(meth)acrylate copolymer particle dispersion (10) is prepared in the same manner as in the preparation of the styrene-(meth)acrylate copolymer particle dispersion (1), except that the emulsion (1-1) is changed to the emulsion (10-1), the emulsion (1-2) is changed to the emulsion (10-2), the emulsion (1-3) is changed to the emulsion (10-3), and the emulsion (1-4) is changed to the emulsion (10-4).

The volume-average particle size of the obtained resin particles is 160 nm. In addition, the glass transition temperature measured with a differential scanning calorimeter is 10°C.

[Preparation of Styrene-(Meth)acrylate Copolymer Particle Dispersion (11)]

[Preparation of Emulsions (11-1 to 11-4)]

<Emulsion (11-1)>

· Styrene: 40 parts
· Ethyl acrylate: 58.5 parts
· 1,10-Decanediol diacrylate: 1.5 parts
· Anionic surfactant (ELEMINOL MON-2, manufactured by Sanyo Chemical Industries, Ltd.): 1.2 parts
· Deionized water: 98.8 parts

The above-described materials are added to a mixing vessel equipped with a stirrer, and stirred to prepare an emulsion (11-1).

<Emulsion (11-2)>

· Styrene: 35 parts
· Ethyl acrylate: 63.5 parts
· 1,10-Decanediol diacrylate: 1.5 parts
· Anionic surfactant (ELEMINOL MON-2, manufactured by Sanyo Chemical Industries, Ltd.): 1.2 parts
· Deionized water: 98.8 parts

The above-described materials are added to a mixing vessel equipped with a stirrer, and stirred to prepare an emulsion (11-2).

<Emulsion (11-3)>

· Styrene: 30 parts
· Ethyl acrylate: 68.5 parts

· 1,10-Decanediol diacrylate: 1.5 parts
· Anionic surfactant (ELEMINOL MON-2, manufactured by Sanyo Chemical Industries, Ltd.): 1.2 parts
· Deionized water: 98.8 parts

The above-described materials are added to a mixing vessel equipped with a stirrer, and stirred to prepare an emulsion (11-3).

<Emulsion (11-4)>

· Styrene: 21.5 parts
· Ethyl acrylate: 77 parts
· 1,10-Decanediol diacrylate: 1.5 parts
· Anionic surfactant (ELEMINOL MON-2, manufactured by Sanyo Chemical Industries, Ltd.): 1.2 parts
· Deionized water: 98.8 parts

The above-described materials are added to a mixing vessel equipped with a stirrer, and stirred to prepare an emulsion (11-4).

A styrene-(meth)acrylate copolymer particle dispersion (11) is prepared in the same manner as in the preparation of the styrene-(meth)acrylate copolymer particle dispersion (1), except that the emulsion (1-1) is changed to the emulsion (11-1), the emulsion (1-2) is changed to the emulsion (11-2), the emulsion (1-3) is changed to the emulsion (11-3), and the emulsion (1-4) is changed to the emulsion (11-4).

The volume-average particle size of the obtained resin particles is 170 nm. In addition, the glass transition temperature measured with a differential scanning calorimeter is 9°C.

[Preparation of Styrene-(Meth)acrylate Copolymer Particle Dispersion (12)]

[Preparation of Emulsions (12-1 to 12-4)]

<Emulsion (12-1)>

· Styrene: 55 parts
· n-Butyl acrylate: 43.5 parts
· 1,10-Decanediol diacrylate: 1.5 parts
· Anionic surfactant (ELEMINOL MON-2, manufactured by Sanyo Chemical Industries, Ltd.): 1.2 parts
· Deionized water: 98.8 parts

The above-described materials are added to a mixing vessel equipped with a stirrer, and stirred to prepare an emulsion (12-1).

<Emulsion (12-2)>

· Styrene: 54.5 parts
· n-Butyl acrylate: 44 parts
· 1,10-Decanediol diacrylate: 1.5 parts
· Anionic surfactant (ELEMINOL MON-2, manufactured by Sanyo Chemical Industries, Ltd.): 1.2 parts
· Deionized water: 98.8 parts

The above-described materials are added to a mixing vessel equipped with a stirrer, and stirred to prepare an emulsion (12-2).

<Emulsion (12-3)>

· Styrene: 52.5 parts
· n-Butyl acrylate: 46 parts
· 1,10-Decanediol diacrylate: 1.5 parts
· Anionic surfactant (ELEMINOL MON-2, manufactured by Sanyo Chemical Industries, Ltd.): 1.2 parts
· Deionized water: 98.8 parts

The above-described materials are added to a mixing vessel equipped with a stirrer, and stirred to prepare an emulsion (12-3).

<Emulsion (12-4)>

· Styrene: 30 parts
· n-Butyl acrylate: 68.5 parts
· 1,10-Decanediol diacrylate: 1.5 parts
· Anionic surfactant (ELEMINOL MON-2, manufactured by Sanyo Chemical Industries, Ltd.): 1.2 parts
· Deionized water: 98.8 parts

The above-described materials are added to a mixing vessel equipped with a stirrer, and stirred to prepare an emulsion (12-4).
A styrene-(meth)acrylate copolymer particle dispersion (12) is prepared in the same manner as in the preparation of the styrene-(meth)acrylate copolymer particle dispersion (1), except that the emulsion (1-1) is changed to the emulsion (12-1), the emulsion (1-2) is changed to the emulsion (12-2), the emulsion (1-3) is changed to the emulsion (12-3), and the emulsion (1-4) is changed to the emulsion (12-4).
The volume-average particle size of the obtained resin particles is 155 nm. In addition, the glass transition temperature measured with a differential scanning calorimeter is 9°C.

[Preparation of Styrene-(Meth)acrylate Copolymer Particle Dispersion (13)]

[Preparation of Emulsions (13-1 to 13-4)]

<Emulsion (13-1)>

· Styrene: 55 parts
· 2-Ethylhexyl acrylate: 43.5 parts
· 1,10-Decanediol diacrylate: 1.5 parts
· Anionic surfactant (ELEMINOL MON-2, manufactured by Sanyo Chemical Industries, Ltd.): 1.2 parts
· Deionized water: 98.8 parts

The above-described materials are added to a mixing vessel equipped with a stirrer, and stirred to prepare an emulsion (13-1).

<Emulsion (13-2)>

· Styrene: 54.5 parts
· 2-Ethylhexyl acrylate: 44 parts
· 1,10-Decanediol diacrylate: 1.5 parts
· Anionic surfactant (ELEMINOL MON-2, manufactured by Sanyo Chemical Industries, Ltd.): 1.2 parts
· Deionized water: 98.8 parts

The above-described materials are added to a mixing vessel equipped with a stirrer, and stirred to prepare an emulsion (13-2).

<Emulsion (13-3)>

· Styrene: 50.5 parts
· 2-Ethylhexyl acrylate: 48 parts
· 1,10-Decanediol diacrylate: 1.5 parts
· Anionic surfactant (ELEMINOL MON-2, manufactured by Sanyo Chemical Industries, Ltd.): 1.2 parts
· Deionized water: 98.8 parts

The above-described materials are added to a mixing vessel equipped with a stirrer, and stirred to prepare an emulsion (13-3).

<Emulsion (13-4)>

· Styrene: 37 parts
· 2-Ethylhexyl acrylate: 61.5 parts
· 1,10-Decanediol diacrylate: 1.5 parts
· Anionic surfactant (ELEMINOL MON-2, manufactured by Sanyo Chemical Industries, Ltd.): 1.2 parts
· Deionized water: 98.8 parts

The above-described materials are added to a mixing vessel equipped with a stirrer, and stirred to prepare an emulsion (13-4).
A styrene-(meth)acrylate copolymer particle dispersion (13) is prepared in the same manner as in the preparation of the styrene-(meth)acrylate copolymer particle dispersion (1), except that the emulsion (1-1) is changed to the emulsion (13-1), the emulsion (1-2) is changed to the emulsion (13-2), the emulsion (1-3) is changed to the emulsion (13-3), and the emulsion (1-4) is changed to the emulsion (13-4).
The volume-average particle size of the obtained resin particles is 160 nm. In addition, the glass transition temperature measured with a differential scanning calorimeter is -1°C.

[Preparation of Styrene-(Meth)acrylate Copolymer Particle Dispersion (14)]

[Preparation of Emulsions (14-1 to 14-4)]

<Emulsion (14-1)>

· Styrene: 45 parts
· Ethyl acrylate: 53.5 parts
· 1,10-Decanediol diacrylate: 1.5 parts
· Anionic surfactant (ELEMINOL MON-2, manufactured by Sanyo Chemical Industries, Ltd.): 1.2 parts
· Deionized water: 98.8 parts

The above-described materials are added to a mixing vessel equipped with a stirrer, and stirred to prepare an emulsion (14-1).

<Emulsion (14-2)>

· Styrene: 42 parts
· Ethyl acrylate: 56.5 parts

· 1,10-Decanediol diacrylate: 1.5 parts
· Anionic surfactant (ELEMINOL MON-2, manufactured by Sanyo Chemical Industries, Ltd.): 1.2 parts
· Deionized water: 98.8 parts

The above-described materials are added to a mixing vessel equipped with a stirrer, and stirred to prepare an emulsion (14-2).

<Emulsion (14-3)>

· Styrene: 40 parts
· Ethyl acrylate: 58.5 parts
· 1,10-Decanediol diacrylate: 1.5 parts
· Anionic surfactant (ELEMINOL MON-2, manufactured by Sanyo Chemical Industries, Ltd.): 1.2 parts
· Deionized water: 98.8 parts

The above-described materials are added to a mixing vessel equipped with a stirrer, and stirred to prepare an emulsion (14-3).

<Emulsion (14-4)>

· Styrene: 34 parts
· Ethyl acrylate: 64.5 parts
· 1,10-Decanediol diacrylate: 1.5 parts
· Anionic surfactant (ELEMINOL MON-2, manufactured by Sanyo Chemical Industries, Ltd.): 1.2 parts
· Deionized water: 98.8 parts

The above-described materials are added to a mixing vessel equipped with a stirrer, and stirred to prepare an emulsion (14-4).
A styrene-(meth)acrylate copolymer particle dispersion (14) is prepared in the same manner as in the preparation of the styrene-(meth)acrylate copolymer particle dispersion (1), except that the emulsion (1-1) is changed to the emulsion (14-1), the emulsion (1-2) is changed to the emulsion (14-2), the emulsion (1-3) is changed to the emulsion (14-3), and the emulsion (1-4) is changed to the emulsion (14-4).
The volume-average particle size of the obtained resin particles is 170 nm. In addition, the glass transition temperature measured with a differential scanning calorimeter is 31°C.

[Preparation of Styrene-(Meth)acrylate Copolymer Particle Dispersion (15)]

A styrene-(meth)acrylate copolymer particle dispersion (15) is prepared in the same manner as in the preparation of the styrene-(meth)acrylate copolymer particle dispersion (1), except that the amount of the anionic surfactant (ELEMINOL MON-2) added to the reaction vessel is changed from 1.1 parts to 3.5 parts.
The volume-average particle size of the obtained resin particles is 45 nm. In addition, the glass transition temperature measured with a differential scanning calorimeter is 17°C.

[Preparation of Styrene-(Meth)acrylate Copolymer Particle Dispersion (16)]

A styrene-(meth)acrylate copolymer particle dispersion (16) is prepared in the same manner as in the preparation of the styrene-(meth)acrylate copolymer particle dispersion (1), except that the amount of the anionic surfactant (ELEMINOL MON-2) added to the reaction vessel is changed from 1.1 parts to 0.2 parts.
The volume-average particle size of the obtained resin particles is 310 nm. In addition, the glass transition temperature measured with a differential scanning calorimeter is 17°C.

[Preparation of Styrene-(Meth)acrylate Copolymer Particle Dispersion (17)]

[Preparation of Emulsions (17-1 to 17-4)]

<Emulsion (17-1)>

· Styrene: 60 parts
· n-Butyl acrylate: 38 parts
· 1,10-Decanediol diacrylate: 2 parts
· Anionic surfactant (ELEMINOL MON-2, manufactured by Sanyo Chemical Industries, Ltd.): 1.2 parts
· Deionized water: 98.8 parts

The above-described materials are added to a mixing vessel equipped with a stirrer, and stirred to prepare an emulsion (17-1).

<Emulsion (17-2)>

· Styrene: 55 parts
· n-Butyl acrylate: 43.2 parts
· 1,10-Decanediol diacrylate: 1.8 parts
· Anionic surfactant (ELEMINOL MON-2): 1.2 parts
· Deionized water: 98.8 parts

The above-described materials are added to a mixing vessel equipped with a stirrer, and stirred to prepare an emulsion (17-2).

<Emulsion (17-3)>

· Styrene: 45 parts
· n-Butyl acrylate: 53.6 parts
· 1,10-Decanediol diacrylate: 1.4 parts
· Anionic surfactant (ELEMINOL MON-2): 1.2 parts
· Deionized water: 98.8 parts

The above-described materials are added to a mixing vessel equipped with a stirrer, and stirred to prepare an emulsion (17-3).

<Emulsion (17-4)>

· Styrene: 40 parts
· n-Butyl acrylate: 59.2 parts
· 1,10-Decanediol diacrylate: 0.8 parts
· Anionic surfactant (ELEMINOL MON-2): 1.2 parts
· Deionized water: 98.8 parts

The above-described materials are added to a mixing vessel equipped with a stirrer, and stirred to prepare an emulsion (17-4).

A styrene-(meth)acrylate copolymer particle dispersion (17) is prepared in the same manner as in the preparation of the styrene-(meth)acrylate copolymer particle dispersion (1), except that the emulsion (1-1) is changed to the emulsion (17-1), the emulsion (1-2) is changed to the emulsion (17-2), the emulsion (1-3) is changed to the emulsion (17-3), and the emulsion (1-4) is changed to the emulsion (17-4).

The volume-average particle size of the obtained resin particles is 185 nm. In addition, the glass transition temperature measured with a differential scanning calorimeter is 18°C.

[Preparation of Styrene-(Meth)acrylate Copolymer Particle Dispersion (18)]

[Preparation of Emulsions (18-1 to 18-4)]

<Emulsion (18-1)>

· Styrene: 55 parts
· 2-Ethylhexyl acrylate: 43.5 parts
· 1,10-Decanediol diacrylate: 1.5 parts
· Anionic surfactant (ELEMINOL MON-2, manufactured by Sanyo Chemical Industries, Ltd.): 1.2 parts
· Deionized water: 98.8 parts

The above-described materials are added to a mixing vessel equipped with a stirrer, and stirred to prepare an emulsion (18-1).

<Emulsion (18-2)>

· Styrene: 51 parts
· 2-Ethylhexyl acrylate: 47.5 parts
· 1,10-Decanediol diacrylate: 1.5 parts
· Anionic surfactant (ELEMINOL MON-2, manufactured by Sanyo Chemical Industries, Ltd.): 1.2 parts
· Deionized water: 98.8 parts

The above-described materials are added to a mixing vessel equipped with a stirrer, and stirred to prepare an emulsion (18-2).

<Emulsion (18-3)>

· Styrene: 40 parts
· 2-Ethylhexyl acrylate: 58.5 parts
· 1,10-Decanediol diacrylate: 1.5 parts
· Anionic surfactant (ELEMINOL MON-2, manufactured by Sanyo Chemical Industries, Ltd.): 1.2 parts
· Deionized water: 98.8 parts

The above-described materials are added to a mixing vessel equipped with a stirrer, and stirred to prepare an emulsion (18-3).

<Emulsion (18-4)>

· Styrene: 30.5 parts
· 2-Ethylhexyl acrylate: 68 parts
· 1,10-Decanediol diacrylate: 1.5 parts
· Anionic surfactant (ELEMINOL MON-2, manufactured by Sanyo Chemical Industries, Ltd.): 1.2 parts
· Deionized water: 98.8 parts

The above-described materials are added to a mixing vessel equipped with a stirrer, and stirred to prepare an emulsion (18-4).

A styrene-(meth)acrylate copolymer particle dispersion (18) is prepared in the same manner as in the preparation of the styrene-(meth)acrylate copolymer particle dispersion (1), except that the emulsion (1-1) is changed to the emulsion (18-1), the emulsion (1-2) is changed to the emulsion (18-2), the emulsion (1-3) is changed to the emulsion (18-3), and the emulsion (1-4) is changed to the emulsion (18-4).

The volume-average particle size of the obtained resin particles is 185 nm. In addition, the glass transition temperature measured with a differential scanning calorimeter is 1°C.

[Preparation of Styrene-(Meth)acrylate Copolymer Particle Dispersion (19)]

[Preparation of Emulsions (19-1 to 19-4)]

<Emulsion (19-1)>

· Styrene: 60 parts
· 2-Ethylhexyl acrylate: 38.5 parts
· 1,10-Decanediol diacrylate: 1.5 parts
· Anionic surfactant (ELEMINOL MON-2, manufactured by Sanyo Chemical Industries, Ltd.): 1.2 parts
· Deionized water: 98.8 parts

The above-described materials are added to a mixing vessel equipped with a stirrer, and stirred to prepare an emulsion (19-1).

<Emulsion (19-2)>

· Styrene: 55 parts
· 2-Ethylhexyl acrylate: 43.5 parts
· 1,10-Decanediol diacrylate: 1.5 parts
· Anionic surfactant (ELEMINOL MON-2, manufactured by Sanyo Chemical Industries, Ltd.): 1.2 parts
· Deionized water: 98.8 parts

The above-described materials are added to a mixing vessel equipped with a stirrer, and stirred to prepare an emulsion (19-2).

<Emulsion (19-3)>

· Styrene: 45 parts
· 2-Ethylhexyl acrylate: 53.5 parts
· 1,10-Decanediol diacrylate: 1.5 parts
· Anionic surfactant (ELEMINOL MON-2, manufactured by Sanyo Chemical Industries, Ltd.): 1.2 parts
· Deionized water: 98.8 parts

The above-described materials are added to a mixing vessel equipped with a stirrer, and stirred to prepare an emulsion (19-3).

<Emulsion (19-4)>

. Styrene: 40 parts
· 2-Ethylhexyl acrylate: 58 parts
· 1,10-Decanediol diacrylate: 1.5 parts

· Anionic surfactant (ELEMINOL MON-2, manufactured by Sanyo Chemical Industries, Ltd.): 1.2 parts
· Deionized water: 98.8 parts

The above-described materials are added to a mixing vessel equipped with a stirrer, and stirred to prepare an emulsion (19-4).

A styrene-(meth)acrylate copolymer particle dispersion (19) is prepared in the same manner as in the preparation of the styrene-(meth)acrylate copolymer particle dispersion (1), except that the emulsion (1-1) is changed to the emulsion (19-1), the emulsion (1-2) is changed to the emulsion (19-2), the emulsion (1-3) is changed to the emulsion (19-3), and the emulsion (1-4) is changed to the emulsion (19-4).

The volume-average particle size of the obtained resin particles is 165 nm. In addition, the glass transition temperature measured with a differential scanning calorimeter is 3°C.

<Emulsion (20)>

· Styrene: 200 parts
· n-Butyl acrylate: 194 parts
· 1,10-Decanediol diacrylate: 6 parts
· Anionic surfactant (ELEMINOL MON-2): 5 parts
· Deionized water: 395 parts

The above-described materials are added to a mixing vessel equipped with a stirrer, and stirred to prepare an emulsion (20).

[Preparation of Styrene-(Meth)acrylate Copolymer Particle Dispersion (20)]

1.1 parts of an anionic surfactant (ELEMINOL MON-2) and 400 parts of deionized water are added to a reaction vessel equipped with a stirrer and a nitrogen introduction tube, after replacing the inside of the reaction vessel with nitrogen. The reaction solution is heated in an oil bath while being stirred so that the temperature of the reaction solution is set to 75°C. After adding 10 parts of the emulsion (20) thereto, 50 parts of an ammonium persulfate aqueous solution in which a concentration is adjusted to 10% by mass is further added thereto, and the reaction solution is retained for 30 minutes.

Thereafter, in a state where the temperature of the reaction solution is maintained at 75°C, 390 parts of the emulsion (20) is gradually added dropwise to the reaction vessel over 30 minutes by a pump.

After completion of the dropwise addition, the temperature of the reaction solution is set to 80°C, the temperature is maintained for 3 hours, and then the reaction solution is cooled to room temperature. Thereafter, deionized water and nitric acid are added thereto so that the concentration of solid content is 20% by mass, thereby preparing a styrene-(meth)acrylate copolymer particle dispersion (20).

The volume-average particle size of the obtained resin particles is 170 nm. In addition, the glass transition temperature measured with a differential scanning calorimeter is 5°C.

[Preparation of Styrene-(Meth)acrylate Copolymer Particle Dispersion (21)]

[Preparation of Emulsions (21-1 to 21-4)]

<Emulsion (21-1)>

· Styrene: 52 parts
· n-Butyl acrylate: 46.5 parts
· 1,10-Decanediol diacrylate: 1.5 parts
· Anionic surfactant (ELEMINOL MON-2, manufactured by Sanyo Chemical Industries, Ltd.): 1.2 parts
· Deionized water: 98.8 parts

The above-described materials are added to a mixing vessel equipped with a stirrer, and stirred to prepare an emulsion (21-1).

<Emulsion (21-2)>

· Styrene: 45 parts
· n-Butyl acrylate: 53.5 parts
· 1,10-Decanediol diacrylate: 1.5 parts
· Anionic surfactant (ELEMINOL MON-2, manufactured by Sanyo Chemical Industries, Ltd.): 1.2 parts
· Deionized water: 98.8 parts

The above-described materials are added to a mixing vessel equipped with a stirrer, and stirred to prepare an emulsion (21-2).

<Emulsion (21-3)>

· Styrene: 40 parts
· n-Butyl acrylate: 58.5 parts
· 1,10-Decanediol diacrylate: 1.5 parts
· Anionic surfactant (ELEMINOL MON-2, manufactured by Sanyo Chemical Industries, Ltd.): 1.2 parts
· Deionized water: 98.8 parts

The above-described materials are added to a mixing vessel equipped with a stirrer, and stirred to prepare an emulsion (21-3).

<Emulsion (21-4)>

· Styrene: 48 parts
· n-Butyl acrylate: 50.5 parts
· 1,10-Decanediol diacrylate: 1.5 parts
· Anionic surfactant (ELEMINOL MON-2, manufactured by Sanyo Chemical Industries, Ltd.): 1.2 parts
· Deionized water: 98.8 parts

The above-described materials are added to a mixing vessel equipped with a stirrer, and stirred to prepare an emulsion (21-4).
A styrene-(meth)acrylate copolymer particle dispersion (21) is prepared in the same manner as in the preparation of the styrene-(meth)acrylate copolymer particle dispersion (1), except that the emulsion (1-1) is changed to the emulsion (21-1), the emulsion (1-2) is changed to the emulsion (21-2), the emulsion (1-3) is changed to the emulsion (21-3), and the emulsion (1-4) is changed to the emulsion (21-4).
The volume-average particle size of the obtained resin particles is 160 nm. In addition, the glass transition temperature measured with a differential scanning calorimeter is 6°C.

[Preparation of Styrene-(Meth)acrylate Copolymer Particle Dispersion (22)]

[Preparation of Emulsions (22-1 to 22-4)]

<Emulsion (22-1)>

· Styrene: 59 parts
· n-Butyl acrylate: 39.5 parts
· 1,10-Decanediol diacrylate: 1.5 parts
· Anionic surfactant (ELEMINOL MON-2, manufactured by Sanyo Chemical Industries, Ltd.): 1.2 parts
· Deionized water: 98.8 parts

The above-described materials are added to a mixing vessel equipped with a stirrer, and stirred to prepare an emulsion (22-1).

<Emulsion (22-2)>

· Styrene: 56 parts
· n-Butyl acrylate: 42.5 parts
· 1,10-Decanediol diacrylate: 1.5 parts
· Anionic surfactant (ELEMINOL MON-2, manufactured by Sanyo Chemical Industries, Ltd.): 1.2 parts
· Deionized water: 98.8 parts

The above-described materials are added to a mixing vessel equipped with a stirrer, and stirred to prepare an emulsion (22-2).

<Emulsion (22-3)>

· Styrene: 55.5 parts
· n-Butyl acrylate: 43 parts
· 1,10-Decanediol diacrylate: 1.5 parts
· Anionic surfactant (ELEMINOL MON-2, manufactured by Sanyo Chemical Industries, Ltd.): 1.2 parts
· Deionized water: 98.8 parts

The above-described materials are added to a mixing vessel equipped with a stirrer, and stirred to prepare an emulsion (22-3).

<Emulsion (22-4)>

· Styrene: 55 parts
· n-Butyl acrylate: 43.5 parts
· 1,10-Decanediol diacrylate: 1.5 parts
· Anionic surfactant (ELEMINOL MON-2, manufactured by Sanyo Chemical Industries, Ltd.): 1.2 parts
· Deionized water: 98.8 parts

The above-described materials are added to a mixing vessel equipped with a stirrer, and stirred to prepare an emulsion (22-4).
A styrene-(meth)acrylate copolymer particle dispersion (22) is prepared in the same manner as in the preparation of the styrene-(meth)acrylate copolymer particle dispersion (1), except that the emulsion (1-1) is changed to the emulsion (22-1), the emulsion (1-2) is changed to the emulsion (22-2), the emulsion (1-3) is changed to the emulsion (22-3), and the emulsion (1-4) is changed to the emulsion (22-4).
The volume-average particle size of the obtained resin particles is 170 nm. In addition, the glass transition temperature measured with a differential scanning calorimeter is 25°C.

[Preparation of Styrene-(Meth)acrylate Copolymer Particle Dispersion (23)]

[Preparation of Emulsions (23-1 to 23-4)]

<Emulsion (23-1)>

· Styrene: 53 parts
· Ethyl acrylate: 45.5 parts

· 1,10-Decanediol diacrylate: 1.5 parts
· Anionic surfactant (ELEMINOL MON-2, manufactured by Sanyo Chemical Industries, Ltd.): 1.2 parts
· Deionized water: 98.8 parts

The above-described materials are added to a mixing vessel equipped with a stirrer, and stirred to prepare an emulsion (23-1).

<Emulsion (23-2)>

· Styrene: 24 parts
· Ethyl acrylate: 74.5 parts
· 1,10-Decanediol diacrylate: 1.5 parts
· Anionic surfactant (ELEMINOL MON-2, manufactured by Sanyo Chemical Industries, Ltd.): 1.2 parts
. Deionized water: 98.8 parts

The above-described materials are added to a mixing vessel equipped with a stirrer, and stirred to prepare an emulsion (23-2).

<Emulsion (23-3)>

· Styrene: 22 parts
· Ethyl acrylate: 76.5 parts
· 1,10-Decanediol diacrylate: 1.5 parts
· Anionic surfactant (ELEMINOL MON-2, manufactured by Sanyo Chemical Industries, Ltd.): 1.2 parts
· Deionized water: 98.8 parts

The above-described materials are added to a mixing vessel equipped with a stirrer, and stirred to prepare an emulsion (23-3).

<Emulsion (23-4)>

· Styrene: 19.5 parts
· Ethyl acrylate: 79 parts
· 1,10-Decanediol diacrylate: 1.5 parts
· Anionic surfactant (ELEMINOL MON-2, manufactured by Sanyo Chemical Industries, Ltd.): 1.2 parts
· Deionized water: 98.8 parts

The above-described materials are added to a mixing vessel equipped with a stirrer, and stirred to prepare an emulsion (23-4).
A styrene-(meth)acrylate copolymer particle dispersion (23) is prepared in the same manner as in the preparation of the styrene-(meth)acrylate copolymer particle dispersion (1), except that the emulsion (1-1) is changed to the emulsion (23-1), the emulsion (1-2) is changed to the emulsion (23-2), the emulsion (1-3) is changed to the emulsion (23-3), and the emulsion (1-4) is changed to the emulsion (23-4).
The volume-average particle size of the obtained resin particles is 175 nm. In addition, the glass transition temperature measured with a differential scanning calorimeter is 19°C.

[Preparation of Styrene-(Meth)acrylate Copolymer Particle Dispersion (24)]

[Preparation of Emulsions (24-1 to 24-4)]

<Emulsion (24-1)>

· Styrene: 68 parts
· n-Butyl acrylate: 30.5 parts
· 1,10-Decanediol diacrylate: 1.5 parts
· Anionic surfactant (ELEMINOL MON-2, manufactured by Sanyo Chemical Industries, Ltd.): 1.2 parts
· Deionized water: 98.8 parts

The above-described materials are added to a mixing vessel equipped with a stirrer, and stirred to prepare an emulsion (24-1).

<Emulsion (24-2)>

· Styrene: 57 parts
· n-Butyl acrylate: 41.5 parts
· 1,10-Decanediol diacrylate: 1.5 parts
· Anionic surfactant (ELEMINOL MON-2, manufactured by Sanyo Chemical Industries, Ltd.): 1.2 parts
· Deionized water: 98.8 parts

The above-described materials are added to a mixing vessel equipped with a stirrer, and stirred to prepare an emulsion (24-2).

<Emulsion (24-3)>

· Styrene: 45 parts
· n-Butyl acrylate: 53.5 parts
· 1,10-Decanediol diacrylate: 1.5 parts
· Anionic surfactant (ELEMINOL MON-2, manufactured by Sanyo Chemical Industries, Ltd.): 1.2 parts
· Deionized water: 98.8 parts

The above-described materials are added to a mixing vessel equipped with a stirrer, and stirred to prepare an emulsion (24-3).

<Emulsion (24-4)>

· Styrene: 30 parts
· n-Butyl acrylate: 68.5 parts
· 1,10-Decanediol diacrylate: 1.5 parts
· Anionic surfactant (ELEMINOL MON-2, manufactured by Sanyo Chemical Industries, Ltd.): 1.2 parts
· Deionized water: 98.8 parts

The above-described materials are added to a mixing vessel equipped with a stirrer, and stirred to prepare an emulsion (24-4).
A styrene-(meth)acrylate copolymer particle dispersion (24) is prepared in the same manner as in the preparation of the styrene-(meth)acrylate copolymer particle dispersion (1), except that the emulsion (1-1) is changed to the emulsion (24-1), the emulsion (1-2) is changed to the emulsion (24-2), the emulsion (1-3) is changed to the emulsion (24-3), and the emulsion (1-4) is changed to the emulsion (24-4).

The volume-average particle size of the obtained resin particles is 160 nm. In addition, the glass transition temperature measured with a differential scanning calorimeter is 17°C.

[Preparation of Styrene-Butadiene Rubber Particle Dispersion (1)]

· Styrene: 48 parts
· Butadiene: 50 parts
· Acrylic acid: 1.9 parts
· tert-Dodecanethiol: 0.1 parts
· Anionic surfactant (Dowfax2a-1 manufactured by The Dow Chemical Company): 1.2 parts
· Deionized water: 200 parts
· Potassium persulfate: 1 part

The above-described materials are put into a polymerization reactor and polymerized in a nitrogen atmosphere and at a temperature of 50°C for 2 hours, and then the reaction is continued for 3 hours to terminate the polymerization. Deionized water is added to the obtained dispersion, and the concentration of solid content is adjusted to 20% by mass to obtain a rubber particle dispersion (1).

The volume-average particle size of the obtained resin particles is 200 nm. In addition, the glass transition temperature measured with a differential scanning calorimeter is -24°C.

[Preparation of Amorphous Polyester Resin Dispersion (1)]

· Terephthalic acid: 28 parts by mole
· Isophthalic acid: 15 parts by mole
· Adipic acid: 5 parts by mole
· Trimellitic anhydride: 2 parts by mole
· Propylene oxide (2 mol) adduct of bisphenol A: 50 parts by mole

The above-described materials are put in a reaction vessel equipped with a stirrer, a nitrogen introduction tube, a temperature sensor, and a rectifying column, the temperature is raised to 190°C for 1 hour, and dibutyltin oxide is added to the mixture in an amount of 1.2 parts with respect to 100 parts of the above-described materials. While the generated water is distilled off, the temperature is raised to 240°C for 6 hours, a dehydrocondensation reaction is continued for 3 hours in the reaction solution retained at 240°C, and then the reactant is cooled to obtain an amorphous polyester resin (1).

· Amorphous polyester resin (1): 100 parts
· Methyl ethyl ketone: 60 parts
· Isopropanol: 10 parts
· 10% aqueous ammonia solution: 3.5 parts

The above-described materials are put in a jacketed reaction tank equipped with a condenser, a thermometer, a water dripping device, and an anchor blade, and in a state in which the reaction tank is retained at a liquid temperature of 50°C in a water-circulation type thermostatic bath, the amorphous polyester resin (1) is dissolved while stirring and mixing the mixture at 100 rpm. Next, the water-circulation type thermostatic bath is set to 40°C, and a total of 300 parts of deionized water retained at 40°C is added dropwise to the reaction tank at a rate of 3 parts/min to cause phase inversion, thereby obtaining an emulsion.

The obtained emulsion is added to an eggplant flask, and the eggplant flask is set through a trap ball in an evaporator equipped with a vacuum control unit. While being rotated, the eggplant flask is heated in a hot water bath at 60°C, the pressure is reduced to 7 kPa with care to sudden boiling to remove the solvent, and then returned to normal pressure, and the eggplant flask is water-cooled to obtain a dispersion. Deionized water is added to the obtained dispersion, thereby obtaining an amorphous polyester resin dispersion (1) having a solid content of 20% by mass. The volume-average particle size of the amorphous polyester resin particles in the amorphous polyester resin dispersion (1) is 180 nm.

[Preparation of Amorphous Polyester Resin Dispersion (2)]

An amorphous polyester resin dispersion (2) is obtained in the same manner as in the preparation of the amorphous polyester resin dispersion (1), except that the amounts of materials added are changed as follows.

· Terephthalic acid: 38.5 parts by mole
· Isophthalic acid: 4.5 parts by mole
· Adipic acid: 5 parts by mole
· Trimellitic anhydride: 2 parts by mole
· Propylene oxide (2 mol) adduct of bisphenol A: 50 parts by mole

The volume-average particle size of the amorphous polyester resin particles in the amorphous polyester resin dispersion (2) is 180 nm.

[Preparation of Amorphous Polyester Resin Dispersion (3)]

An amorphous polyester resin dispersion (3) is obtained in the same manner as in the preparation of the amorphous polyester resin dispersion (1), except that the amounts of materials added are changed as follows.

· Terephthalic acid: 17 parts by mole
· Isophthalic acid: 26 parts by mole
· Adipic acid: 5 parts by mole
· Trimellitic anhydride: 2 parts by mole
· Propylene oxide (2 mol) adduct of bisphenol A: 50 parts by mole

The volume-average particle size of the amorphous polyester resin particles in the amorphous polyester resin dispersion (3) is 180 nm.

[Preparation of Amorphous Polyester Resin Dispersion (4)]

An amorphous polyester resin dispersion (4) is obtained in the same manner as in the preparation of the amorphous polyester resin dispersion (1), except that the amount of propylene oxide (2 mol) adduct of bisphenol A added is changed from 50 parts by mole to 52 parts by mole.
The volume-average particle size of the amorphous polyester resin particles in the amorphous polyester resin dispersion (4) is 190 nm.

[Preparation of Amorphous Polyester Resin Dispersion (5)]

An amorphous polyester resin dispersion (5) is obtained in the same manner as in the preparation of the amorphous polyester resin dispersion (1), except that the amount of propylene oxide (2 mol) adduct of bisphenol A added is changed from 50 parts by mole to 48 parts by mole.
The volume-average particle size of the amorphous polyester resin particles in the amorphous polyester resin dispersion (5) is 170 nm.

[Preparation of Amorphous Polyester Resin Dispersion (6)]

An amorphous polyester resin dispersion (6) is obtained in the same manner as in the preparation of the amorphous polyester resin dispersion (1), except that the amounts of materials added are changed as follows.

· Terephthalic acid: 28 parts by mole
· Isophthalic acid: 15 parts by mole
· Adipic acid: 5 parts by mole
· Trimellitic anhydride: 2 parts by mole
· Propylene oxide (2 mol) adduct of bisphenol A: 35 parts by mole
· Propylene oxide (2 mol) adduct of bisphenol A: 15 parts by mole

The volume-average particle size of the amorphous polyester resin particles in the amorphous polyester resin dispersion (6) is 180 nm.

[Preparation of Amorphous Polyester Resin Dispersion (7)]

An amorphous polyester resin dispersion (7) is obtained in the same manner as in the preparation of the amorphous polyester resin dispersion (1), except that the amounts of materials added are changed as follows.

- · Terephthalic acid: 18 parts by mole
- · Isophthalic acid: 15 parts by mole
- · Adipic acid: 5 parts by mole
- · Fumaric acid: 5 parts by mole
- · Alkenyl succinic acid anhydride: 7 parts by mole
- · Trimellitic anhydride: 2 parts by mole

The volume-average particle size of the amorphous polyester resin particles in the amorphous polyester resin dispersion (7) is 190 nm.

[Preparation of Amorphous Polyester Resin Dispersion (8)]

An amorphous polyester resin dispersion (8) is obtained in the same manner as in the preparation of the amorphous polyester resin dispersion (1), except that the amounts of materials added are changed as follows.

- · Terephthalic acid: 28 parts by mole
- · Isophthalic acid: 15 parts by mole
- · Adipic acid: 5 parts by mole
- · Trimellitic anhydride: 2 parts by mole
- · Propylene oxide (2 mol) adduct of bisphenol A: 35 parts by mole
- · Neopentyl glycol: 15 parts by mole

The volume-average particle size of the amorphous polyester resin particles in the amorphous polyester resin dispersion (8) is 150 nm.

[Preparation of Amorphous Polyester Resin Dispersion (9)]

An amorphous polyester resin dispersion (9) is obtained in the same manner as in the preparation of the amorphous polyester resin dispersion (1), except that the amounts of materials added are changed as follows.

- · Terephthalic acid: 18 parts by mole
- · Isophthalic acid: 15 parts by mole
- · Adipic acid: 15 parts by mole
- · Trimellitic anhydride: 2 parts by mole
- · Propylene oxide (2 mol) adduct of bisphenol A: 50 parts by mole

The volume-average particle size of the amorphous polyester resin particles in the amorphous polyester resin dispersion (9) is 165 nm.

[Preparation of Crystalline Polyester Resin Particle Dispersion (1)]

- · Dodecanedioic acid: 50 parts by mole
- · 1,6-Hexanediol: 50 parts by mole

The above-described materials are put in a reaction vessel equipped with a stirrer, a nitrogen introduction tube, a temperature sensor, and a rectifying column, the temperature is raised to 160°C for 1 hour, and dibutyltin oxide is added to the mixture in an amount of 0.8 parts with respect to 100 parts of the above-described materials. While the generated water is distilled off, the temperature is raised to 180°C for 6 hours, and while maintaining the temperature at 180°C and stirring for 5 hours, the reaction is allowed to progress by refluxing in the container. Next, the temperature is slowly raised to 230°C under reduced pressure (3 kPa), and the reaction solution is stirred for 2 hours in a state of being retained at 230°C. Subsequently, the reactant is cooled. After cooling, solid-liquid separation is performed, and the solids are dried, thereby obtaining a crystalline polyester resin (1). The weight-average molecular weight of the crystalline polyester resin (1) is 29,000.

· Crystalline polyester resin (1): 100 parts
· Methyl ethyl ketone: 70 parts
· Isopropanol: 12 parts
· 10% aqueous ammonia solution: 3 parts

The above-described materials are put in a jacketed reaction tank equipped with a condenser, a thermometer, a water dripping device, and an anchor blade, and in a state in which the reaction tank is retained at a liquid temperature of 80°C in a water-circulation type thermostatic bath, the crystalline polyester resin (1) is dissolved while stirring and mixing the mixture at 100 rpm. Next, the water-circulation type thermostatic bath is set to 60°C, and a total of 300 parts of deionized water retained at 60°C is added dropwise to the reaction tank at a rate of 3 parts/min to cause phase inversion, thereby obtaining an emulsion.

The obtained emulsion is added to an eggplant flask, and the eggplant flask is set through a trap ball in an evaporator equipped with a vacuum control unit. While being rotated, the eggplant flask is heated in a hot water bath at 60°C, the pressure is reduced to 7 kPa with care to sudden boiling to remove the solvent, and then returned to normal pressure, and the eggplant flask is water-cooled to obtain a dispersion. Deionized water is added to the dispersion, thereby obtaining a crystalline polyester resin particle dispersion (1) having a solid content of 20% by mass. The volume-average particle size of the crystalline polyester resin particles in the crystalline polyester resin particle dispersion (1) is 160 nm.

[Preparation of Colorant Particle Dispersion]

· Carbon black (Regel 330, manufactured by Cabot Corporation.): 110 parts
· Anionic surfactant (NEOPELEX G-65, Kao Corporation): 6 parts
· Deionized water: 300 parts

The above-described materials are mixed together and dispersed for 10 minutes using a homogenizer (ULTRA-TURRAX T50, manufactured by IKA). Deionized water is added to the obtained dispersion, thereby obtaining a colorant particle dispersion having a solid content of 20% by mass. The volume-average particle size of the colorant particles in the colorant particle dispersion is 220 nm.

[Preparation of Release Agent Particle Dispersion]

· Fischer-Tropsch wax (Sasol wax H1, SASOL): 100 parts
· Anionic surfactant (NEOPELEX G-65): 6 parts
· Deionized water: 300 parts

The above-described materials are mixed together, heated to 100°C, and dispersed using a homogenizer (ULTRA-TURRAX T50). Furthermore, a dispersion treatment is performed using a Manton-Gaulin high-pressure homogenizer (manufactured by Gaulin Corporation), and deionized water is added to the dispersion, thereby obtaining a release agent particle dispersion having a solid content of 20% by mass. The volume-average particle size of the release agent particles in the release agent particle dispersion is 230 nm.

[Example 1]

(Production of Toner 1)

· Amorphous polyester resin dispersion (1) (solid content: 20% by mass): 30 parts
· Styrene-(meth)acrylate copolymer particle dispersion (1) (solid content: 20% by mass): 9 parts
· Crystalline polyester resin dispersion (solid content: 20% by mass): 18 parts

· Colorant particle dispersion (solid content: 20% by mass): 6 parts
· Release agent particle dispersion (solid content: 20% by mass): 8 parts
· Anionic surfactant (ELEMINOL MON-2): 0.7 parts
· Deionized water: 50 parts

The above-described materials are put in a reaction vessel equipped with a thermometer, a pH meter, and a stirrer, and the temperature of the reaction vessel is retained at 20°C and retained for 30 minutes while stirring at 150 rpm. Next, a 0.3N aqueous nitric acid solution is added thereto such that the pH is adjusted to 5.0, and then a 2% aluminum sulfate aqueous solution is added thereto in a state in which the reaction solution is dispersed with a homogenizer (ULTRA-TURRAX T50). Next, in a state in which the reaction solution is stirred, the temperature thereof is raised to 45°C at a rate of 0.4°C/min and retained for 30 minutes.

Next, 29 parts of the amorphous polyester resin particle dispersion (1) is added thereto, and the mixture is retained for 30 minutes. Next, a 0.1N sodium hydroxide aqueous solution is added thereto such that the pH is adjusted to 8.5, and the reaction solution is retained for 15 minutes, heated to 80°C at a rate of 1°C/min while being continuously stirred, and retained at 80°C for 5 hours. Next, after cooling, solid-liquid separation, and washing of solid matter with deionized water, the solid matter is dried for 24 hours in a freeze vacuum dryer to obtain toner particles (1) having a volume-average particle size of 5.5 μm.

100 parts of the toner particles (1) and 2.0 parts of hydrophobic silica (manufactured by Nippon Aerosil Co., Ltd.; product name: RY200) are mixed with a Henshell mixer to obtain a toner 1.

[Examples 2 to 30 and Comparative Examples 1 to 6]

(Production of Toners 2 to 30 and Toners C1 to C6)

Toners 2 to 30 and toners C1 to C6 are obtained in the same manner as in the production of the toner 1, except that the amount of each material added is changed as shown in Table 1.

[Table 1]

| Example and Comparative Example | Toner | Initial charged dispersion | | | | | | | Additional dispersion | |
|---|---|---|---|---|---|---|---|---|---|---|
| | | Styrene-(meth)acrylate copolymer resin particles | | Amorphous resin | | Crystalline resin | Colorant dispersion | Release agent dispersion | Amorphous resin | |
| | | Type of resin particle dispersion (styrene-butadiene rubber particle dispersion only in Comparative Example 1) | Addition amount (parts) | Type of amorphous polyester resin dispersion | Addition amount (parts) | Addition amount (parts) | Addition amount (parts) | Addition amount (parts) | Type of amorphous polyester resin dispersion | Addition amount (parts) |
| Example 1 | Toner 1 | 1 | 9 | 1 | 30 | 18 | 6 | 8 | 1 | 29 |
| Example 2 | Toner 2 | 2 | 9 | 1 | 30 | 18 | 6 | 8 | 1 | 29 |
| Example 3 | Toner 3 | 3 | 9 | 1 | 30 | 18 | 6 | 8 | 1 | 29 |
| Example 4 | Toner 4 | 4 | 9 | 1 | 30 | 18 | 6 | 8 | 1 | 29 |
| Example 5 | Toner 5 | 5 | 9 | 1 | 30 | 18 | 6 | 8 | 1 | 29 |
| Example 6 | Toner 6 | 6 | 9 | 1 | 30 | 18 | 6 | 8 | 1 | 29 |
| Example 7 | Toner 7 | 7 | 9 | 1 | 30 | 18 | 6 | 8 | 1 | 29 |
| Example 8 | Toner 8 | 8 | 9 | 1 | 30 | 18 | 6 | 8 | 1 | 29 |
| Example 9 | Toner 9 | 9 | 9 | 1 | 30 | 18 | 6 | 8 | 1 | 29 |
| Example 10 | Toner 10 | 10 | 9 | 1 | 30 | 18 | 6 | 8 | 1 | 29 |
| Example 11 | Toner 11 | 11 | 9 | 1 | 30 | 18 | 6 | 8 | 1 | 29 |

(continued)

| Example and Comparative Example | Toner | Initial charged dispersion | | | | | | | Additional dispersion | |
| | | Styrene-(meth)acrylate copolymer resin particles | | Amorphous resin | | Crystalline resin | Colorant dispersion | Release agent dispersion | Amorphous resin | |
| | | Type of resin particle dispersion (styrene-butadiene rubber particle dispersion only in Comparative Example 1) | Addition amount (parts) | Type of amorphous polyester resin dispersion | Addition amount (parts) | Addition amount (parts) | Addition amount (parts) | Addition amount (parts) | Type of amorphous polyester resin dispersion | Addition amount (parts) |
|---|---|---|---|---|---|---|---|---|---|---|
| Example 12 | Toner 12 | 12 | 9 | 1 | 30 | 18 | 6 | 8 | 1 | 29 |
| Example 13 | Toner 13 | 13 | 9 | 9 | 30 | 18 | 6 | 8 | 9 | 29 |
| Example 14 | Toner 14 | 14 | 9 | 1 | 30 | 18 | 6 | 8 | 1 | 29 |
| Example 15 | Toner 15 | 1 | 1.5 | 1 | 42.5 | 13 | 6 | 8 | 1 | 29 |
| Example 16 | Toner 16 | 1 | 21 | 1 | 21 | 15 | 6 | 8 | 1 | 29 |
| Example 17 | Toner 17 | 15 | 9 | 1 | 30 | 18 | 6 | 8 | 1 | 29 |
| Example 18 | Toner 18 | 16 | 9 | 1 | 30 | 18 | 6 | 8 | 1 | 29 |
| Example 19 | Toner 19 | 17 | 9 | 1 | 30 | 18 | 6 | 8 | 1 | 29 |
| Example 20 | Toner 20 | 1 | 9 | 2 | 30 | 18 | 6 | 8 | 2 | 29 |
| Example 21 | Toner 21 | 1 | 9 | 3 | 30 | 18 | 6 | 8 | 3 | 29 |
| Example 22 | Toner 22 | 1 | 9 | 4 | 30 | 18 | 6 | 8 | 4 | 29 |

52

| Example and Comparative Example | Toner | Initial charged dispersion | | | | | | | Additional dispersion | |
|---|---|---|---|---|---|---|---|---|---|---|
| | | Styrene-(meth)acrylate copolymer resin particles | | Amorphous resin | | Crystalline resin | Colorant dispersion | Release agent dispersion | Amorphous resin | |
| | | Type of resin particle dispersion (styrene-butadiene rubber particle dispersion only in Comparative Example 1) | Addition amount (parts) | Type of amorphous polyester resin dispersion | Addition amount (parts) | Addition amount (parts) | Addition amount (parts) | Addition amount (parts) | Type of amorphous polyester resin dispersion | Addition amount (parts) |
| Example 23 | Toner 23 | 1 | 9 | 5 | 30 | 18 | 6 | 8 | 5 | 29 |
| Example 24 | Toner 24 | 1 | 9 | 6 | 30 | 18 | 6 | 8 | 6 | 29 |
| Example 25 | Toner 25 | 18 | 9 | 7 | 30 | 18 | 6 | 8 | 7 | 29 |
| Example 26 | Toner 26 | 19 | 9 | 8 | 30 | 18 | 6 | 8 | 8 | 29 |
| Example 27 | Toner 27 | 1 | 9 | 1 | 30 | 18 | 6 | 8 | 1 | 29 |
| Example 28 | Toner 28 | 1 | 11 | 1 | 15.5 | 30.5 | 6 | 8 | 1 | 29 |
| Example 29 | Toner 29 | 1 | 3.5 | 1 | 35 | 18.5 | 6 | 8 | 1 | 29 |
| Example 30 | Toner 30 | 1 | 23 | 1 | 23 | 11 | 6 | 8 | 1 | 29 |
| Comparative Example 1 | Toner C1 | Rubber particles 1 | 9 | 1 | 30 | 18 | 6 | 8 | 1 | 29 |
| Comparative Example 2 | Toner C2 | 20 | 9 | 1 | 30 | 18 | 6 | 8 | 1 | 29 |
| Comparative Example 3 | Toner C3 | 21 | 9 | 1 | 30 | 18 | 6 | 8 | 1 | 29 |

EP 4 435 518 A2

53

(continued)

| Example and Comparative Example | Toner | Initial charged dispersion | | | | | | | Additional dispersion | |
|---|---|---|---|---|---|---|---|---|---|---|
| | | Styrene-(meth)acrylate copolymer resin particles | | Amorphous resin | | Crystalline resin | Colorant dispersion | Release agent dispersion | Amorphous resin | |
| | | Type of resin particle dispersion (styrene-butadiene rubber particle dispersion only in Comparative Example 1) | Addition amount (parts) | Type of amorphous polyester resin dispersion | Addition amount (parts) | Addition amount (parts) | Addition amount (parts) | Addition amount (parts) | Type of amorphous polyester resin dispersion | Addition amount (parts) |
| Comparative Example 4 | Toner C4 | 22 | 9 | 1 | 30 | 18 | 6 | 8 | 1 | 29 |
| Comparative Example 5 | Toner C5 | 23 | 9 | 1 | 30 | 18 | 6 | 8 | 1 | 29 |
| Comparative Example 6 | Toner C6 | 24 | 9 | 1 | 30 | 18 | 6 | 8 | 1 | 29 |

With regard to the toners 1 to 30 and the toners C1 to C6 obtained in Examples 1 to 30 and Comparative Examples 1 to 6, the following values are determined, and Table 2 shows items related to the styrene-(meth)acrylate copolymer resin particles, and Table 3 shows items related to the amorphous resin and the crystalline resin. All are measured according to the methods described above or a commonly used method.

Items related to resin particles

As the resin particle dispersion of Comparative Example 1, the styrene-butadiene rubber particle dispersion is used. "-" in Comparative Example 1 indicates that the corresponding numerical value does not exist.

· Actually measured glass transition temperature Tg(E)°C
· Tg(E) - Tg(C1) (glass transition temperature obtained by Fox equation from the ratio of constituent monomers of the resin particles)
· Tg(C1) - Tg(C2) (glass transition temperature obtained by Fox equation from the ratio of constituent monomers from the surface analysis of the resin particles)
· Wa(S): proportion from (meth)acrylate obtained by the surface analysis
· Wa(S) - Wa(B) (proportion from (meth)acrylate in the entire resin particles)
· Content of resin particles in toner
· Average equivalent circle diameter of domain: described as "Equivalent circle diameter of domain"
· Average shape factor SF-1 of domain: described as "SF-1 of domain"

Items related to amorphous resin

· Isophthalic acid proportion in acid monomer:
· Acid value
· Tg(ap) (actually measured value of the glass transition temperature of the amorphous resin) - Tg(C1) (glass transition temperature obtained from the ratio of constituent monomers of the entire resin particles)
· |SP(ap) - SP(sa)|: both are SP values calculated by Fedors method, in which SP(ap) is the SP value of the binder resin and SP(sa) is the SP value obtained from the monomer composition by the surface analysis of the resin particles.

Items related to crystalline resin

· Proportion in binder resin
· w1 (content of the resin particles in the toner)/w2 (content of the crystalline resin in the toner)

(Production of Developer)

8 parts of each toner obtained above and 92 parts of the following carrier are mixed to obtain a developer. The obtained developer is used for the evaluations described below.

(Production of Carrier)

· Ferrite particles (average particle size: 35 μm): 100 parts
· Toluene: 14 parts
· Styrene/methyl methacrylate copolymer (copolymerization ratio: 15/85): 3 parts
· Carbon black: 0.2 parts

The above-described components excluding the ferrite particles are dispersed with a sand mill, thereby preparing a dispersion. The dispersion is put in a vacuum deaerating kneader together with the ferrite particles, and dried under reduced pressure while being stirred, thereby obtaining a carrier.

[Evaluation]

<Image Fixability>

A 30% halftone image is produced by a modified machine of a monochrome printer Revoria Press E1136 (manufactured by FUJIFILM Business Innovation Corp.).

A white cloth is attached to a friction element of the obtained halftone image using a friction tester FR-G (manufactured by Suga Test Instruments Co., Ltd.), and stains attached to the white cloth that is reciprocated 10 times on the image sample are evaluated. The evaluation criteria are as follows, and the results are shown in Table 3.

A: no stains are found.
B: the stain is light, but it is slight and within the acceptable range.
C: the stain is clearly attached, but it is within the acceptable range.
D: the stain is attached, and it is not the acceptable level.

<Abrasion Resistance of Image>

A solid image having a size of 30 mm in both the vertical and horizontal directions is produced by a modified machine of a monochrome printer Revoria Press E1136.

Using a friction tester FR-G, a nitrile rubber (NRB) sheet (product name: NB27ON-0.5-1000-100, manufactured by Akitsu Industry Co,. Ltd.) is attached to the friction element of the obtained solid image, and defects generated in the image sample that is reciprocated 20 times on the image sample are evaluated. The evaluation is performed in environments of 10°C and 30°C.

The evaluation criteria are as follows, and the results are shown in Table 3.

A: no defects are observed in the images at both 10°C and 30°C.
B: slight streak is observed in the image under one of the condition of 10°C or 30°C, but it is slight and within the acceptable range.
C: streaks are clearly formed on the image under one of the condition of 10°C or 30°C, but it is within the acceptable range.
D: streaks are clearly formed on the image under the conditions of both 10°C and 30°C, and it is not the acceptable level.

[Table 2]

| Example and Comparative Example | Stvrene-(meth)acrvlate copolymer resin particles | | | | | | | | |
|---|---|---|---|---|---|---|---|---|---|
| | Type of resin particle dispersion | Tg (E) (°C) | Tg (E) - Tg (C1) | Tg (C1) - Tg (C2) (°C) | Wa(S) (% by mole) | Wa(S) - Wa(B) (% by mole) | Content in toner (% by mass) | Equivalent circle diameter of domain (nm) | Domain SF-1 |
| Example 1 | 1 | 17 | 14 | 14 | 54 | 10 | 9 | 165 | 115 |
| Example 2 | 2 | 9 | 6 | 4 | 47 | 3 | 9 | 170 | 115 |
| Example 3 | 3 | 12 | 9 | 4 | 47 | 3 | 9 | 160 | 112 |
| Example 4 | 4 | 20 | 17 | 14 | 54 | 10 | 9 | 170 | 118 |
| Example 5 | 5 | 22 | 19 | 14 | 54 | 10 | 9 | 170 | 116 |
| Example 6 | 6 | 18 | 11 | 5 | 47 | 4 | 9 | 160 | 113 |
| Example 7 | 7 | 7 | 6 | 1 | 46 | 1 | 9 | 170 | 114 |
| Example 8 | 8 | 12 | 8 | 6 | 41 | 4 | 9 | 165 | 117 |
| Example 9 | 9 | 13 | 13 | 9 | 46 | 6 | 9 | 160 | 112 |
| Example 10 | 10 | 10 | 8 | 3 | 69 | 3 | 9 | 160 | 114 |
| Example 11 | 11 | 9 | 10 | 10 | 79 | 10 | 9 | 170 | 116 |
| Example 12 | 12 | 12 | 12 | 24 | 65 | 19 | 9 | 155 | 111 |
| Example 13 | 13 | -1 | 9 | 18 | 48 | 12 | 9 | 160 | 119 |
| Example 14 | 14 | 31 | 13 | 7 | 66 | 6 | 9 | 170 | 114 |

(continued)

| Example and Comparative Example | Stvrene-(meth)acrvlate copolymer resin particles | | | | | | | | |
|---|---|---|---|---|---|---|---|---|---|
| | Type of resin particle dispersion | Tg (E) (°C) | Tg (E) - Tg (C1) | Tg (C1) - Tg (C2) (°C) | Wa(S) (% by mole) | Wa(S) - Wa(B) (% by mole) | Content in toner (% by mass) | Equivalent circle diameter of domain (nm) | Domain SF-1 |
| Example 15 | 1 | 17 | 14 | 14 | 54 | 10 | 1.5 | 165 | 115 |
| Example 16 | 1 | 17 | 14 | 14 | 54 | 10 | 21 | 165 | 115 |
| Example 17 | 15 | 17 | 14 | 14 | 54 | 10 | 9 | 45 | 109 |
| Example 18 | 16 | 17 | 14 | 14 | 54 | 10 | 9 | 310 | 125 |
| Example 19 | 17 | 18 | 15 | 14 | 55 | 11 | 9 | 185 | 132 |
| Example 20 | 1 | 17 | 14 | 14 | 54 | 10 | 9 | 165 | 115 |
| Example 21 | 1 | 17 | 14 | 14 | 54 | 10 | 9 | 165 | 115 |
| Example 22 | 1 | 17 | 14 | 14 | 54 | 10 | 9 | 165 | 115 |
| Example 23 | 1 | 17 | 14 | 14 | 54 | 10 | 9 | 165 | 115 |
| Example 24 | 1 | 17 | 14 | 14 | 54 | 10 | 9 | 165 | 115 |
| Example 25 | 18 | 1 | 19 | 19 | 56 | 15 | 9 | 160 | 112 |
| Example 26 | 19 | 3 | 13 | 15 | 45 | 10 | 9 | 165 | 114 |
| Example 27 | 1 | 17 | 14 | 14 | 54 | 10 | 9 | 165 | 115 |
| Example 28 | 1 | 17 | 14 | 14 | 54 | 10 | 11 | 165 | 115 |
| Example 29 | 1 | 17 | 14 | 14 | 54 | 10 | 3.5 | 165 | 115 |
| Example 30 | 1 | 17 | 14 | 14 | 54 | 10 | 23 | 165 | 115 |
| Comparative Example 1 | Rubber particles 1 | -24 | 1 | 0 | - | - | 9 | 200 | 120 |
| Comparative Example 2 | 20 | 5 | 2 | 0 | 44 | 0 | 9 | 165 | 117 |
| Comparative Example 3 | 21 | 6 | 8 | -3 | 46 | -2 | 9 | 160 | 114 |
| Comparative Example 4 | 22 | 17 | 4 | 2 | 39 | 1 | 9 | 170 | 116 |
| Comparative Example 5 | 23 | 28 | 21 | 10 | 81 | 10 | 9 | 175 | 115 |
| Comparative Example 6 | 24 | 24 | 21 | 27 | 65 | 21 | 9 | 160 | 112 |

[Table 3]

| Example and Comparative Example | Amorphous polyester resin | | | | | Crystalline resin | | Evaluation | |
|---|---|---|---|---|---|---|---|---|---|
| | Type of resin dispersion | Isophthalic acid proportion (%by mole) | Acid value (mgKOH/g) | Tg(ap) - Tg (C1) (°C) | \|SP(ap) - SP (sa)\| | Proportion in binder resin (% by mass) | w1/w2 | Fixability | Abrasion Resistance |
| Example 1 | 1 | 30 | 10 | 58 | 0.07 | 23.4 | 0.5 | A | A |
| Example 2 | 1 | 30 | 10 | 58 | 0.02 | 23.4 | 0.5 | B | C |
| Example 3 | 1 | 30 | 10 | 58 | 0.02 | 23.4 | 0.5 | A | B |
| Example 4 | 1 | 30 | 10 | 58 | 0.07 | 23.4 | 0.5 | B | A |
| Example 5 | 1 | 30 | 10 | 58 | 0.07 | 23.4 | 0.5 | C | B |
| Example 6 | 1 | 30 | 10 | 57 | 0.02 | 23.4 | 0.5 | A | A |
| Example 7 | 1 | 30 | 10 | 60 | 0.02 | 23.4 | 0.5 | B | C |
| Example 8 | 1 | 30 | 10 | 47 | 0.02 | 23.4 | 0.5 | C | B |
| Example 9 | 1 | 30 | 10 | 51 | 0.01 | 23.4 | 0.5 | B | A |
| Example 10 | 1 | 30 | 10 | 49 | 0.12 | 23.4 | 0.5 | A | B |
| Example 11 | 1 | 30 | 10 | 52 | 0.08 | 23.4 | 0.5 | B | C |
| Example 12 | 1 | 30 | 10 | 61 | 0.14 | 23.4 | 0.5 | C | B |
| Example 13 | 9 | 30 | 10 | 69 | 0.35 | 23.4 | 0.5 | C | C |
| Example 14 | 1 | 30 | 10 | 43 | 0.13 | 23.4 | 0.5 | C | C |
| Example 15 | 1 | 30 | 10 | 58 | 0.09 | 15.4 | 0.12 | B | C |
| Example 16 | 1 | 30 | 10 | 58 | 0.12 | 23.1 | 1.4 | C | B |
| Example 17 | 1 | 30 | 10 | 58 | 0.07 | 23.4 | 0.5 | B | C |
| Example 18 | 1 | 30 | 10 | 58 | 0.07 | 23.4 | 0.5 | C | B |
| Example 19 | 1 | 30 | 10 | 58 | 0.07 | 23.4 | 0.5 | C | B |
| Example 20 | 2 | 9 | 10 | 59 | 0.07 | 23.4 | 0.5 | B | C |
| Example 21 | 3 | 52 | 10 | 57 | 0.07 | 23.4 | 0.5 | B | C |
| Example 22 | 4 | 30 | 47 | 58 | 0.06 | 23.4 | 0.5 | B | C |
| Example 23 | 5 | 30 | 21 | 58 | 0.10 | 23.4 | 0.5 | B | C |

(continued)

| Example and Comparative Example | Amorphous polyester resin | | | | | Crystalline resin | | Evaluation | |
|---|---|---|---|---|---|---|---|---|---|
| | Type of resin dispersion | Isophthalic acid proportion (%by mole) | Acid value (mgKOH/g) | Tg(ap) - Tg (C1) (°C) | \|SP(ap) - SP (sa)\| | Proportion in binder resin (% by mass) | w1/w2 | Fixability | Abrasion Resistance |
| Example 24 | 6 | 30 | 10 | 39 | 0.28 | 23.4 | 0.5 | B | C |
| Example 25 | 7 | 30 | 10 | 91 | 0.36 | 23.4 | 0.5 | B | C |
| Example 26 | 8 | 30 | 10 | 66 | 0.42 | 23.4 | 0.5 | B | C |
| Example 27 | 1 | 30 | 10 | 58 | 0.14 | 143 | 0.8 | C | B |
| Example 28 | 1 | 30 | 10 | 58 | 0.04 | 40.7 | 0.4 | B | C |
| Example 29 | 1 | 30 | 10 | 58 | 0.08 | 22.4 | 0.18 | B | C |
| Example 30 | 1 | 30 | 10 | 58 | 0.12 | 17.5 | 2.1 | C | B |
| Comparative Example 1 | 1 | 30 | 10 | 86 | 0.91 | 23.4 | 0.5 | D | D |
| Comparative Example 2 | 1 | 30 | 10 | 58 | 0.00 | 23.4 | 0.5 | C | D |
| Comparative Example 3 | 1 | 30 | 10 | 63 | 0.01 | 23.4 | 0.5 | B | D |
| Comparative Example 4 | 1 | 30 | 10 | 44 | 0.04 | 23.4 | 0.5 | D | C |
| Comparative Example 5 | 1 | 30 | 10 | 52 | 0.24 | 23.4 | 0.5 | B | D |
| Comparative Example 6 | 1 | 30 | 10 | 58 | 0.13 | 23.4 | 0.5 | D | C |

As shown in Table 3, as compared with the electrostatic charge image developing toners of Comparative Examples, it is found that the electrostatic charge image developing toners of Examples have excellent fixability of the halftone image, and suppress post-processing machine contamination in a wide temperature range.

Supplementary Notes

(((1))) An electrostatic charge image developing toner comprising:

a binder resin; and
resin particles,
wherein the binder resin includes an amorphous resin and a crystalline resin,
the resin particles contain a styrene-(meth)acrylate-based copolymer,
in a case where a glass transition temperature obtained by Fox equation from a ratio of constituent monomers in the entire resin particles is defined as Tg(C1)°C and a glass transition temperature actually measured with a differential scanning calorimeter is defined as Tg(E)°C,

$$5.0 \leq Tg(E) - Tg(C1) \leq 20.0,$$

and
in a case where a glass transition temperature obtained by Fox equation using a ratio of constituent monomers, calculated from a surface analysis of the resin particles, is defined as Tg(C2)°C,

$$Tg(C1) > Tg(C2).$$

(((2))) An electrostatic charge image developing toner comprising:

a binder resin; and
resin particles,
wherein the binder resin includes an amorphous resin and a crystalline resin,
the resin particles contain a styrene-(meth)acrylate-based copolymer, and
in a case where a proportion of units derived from a (meth)acrylate monomer in the resin particles is defined as Wa(B)% by mole, and a proportion of units derived from a (meth)acrylate monomer, by a surface analysis of the resin particles, is defined as Wa(S)% by mole,
Wa(S) is 40% by mole or more and 80% by mole or less, and

$$2 \leq Wa(S) - Wa(B) \leq 20.$$

(((3))) The electrostatic charge image developing toner according to (((1))) or (((2))),
wherein Tg(E) is 0°C or higher and 30°C or lower.
(((4))) The electrostatic charge image developing toner according to (((1))) or (((3))),
wherein the resin particles are crosslinked particles.
(((5))) (((4))), The electrostatic charge image developing toner according to any one of (((1))) to
wherein a proportion of the crystalline resin in the binder resin is 15% by mass or more and 40% by mass or less.
(((6))) The electrostatic charge image developing toner according to any one of (((1))) to (((5))),
wherein the resin particles are contained in an amount of 2% by mass or more and 20% by mass or less.
(((7))) (((6))), The electrostatic charge image developing toner according to any one of (((1))) to
wherein a ratio w1/w2 of a content w1 of the resin particles in the toner to a content w2 of the crystalline resin in the toner is 0.2 or more and 2.0 or less.
(((8))) (((7))), The electrostatic charge image developing toner according to any one of (((1))) to

wherein the amorphous resin includes an amorphous polyester resin, and
the crystalline resin includes a crystalline polyester resin.

(((9))) The electrostatic charge image developing toner according to (((8))),

wherein the amorphous polyester resin includes a unit derived from isophthalic acid, and
a proportion of the unit derived from isophthalic acid in units derived from an acid component monomer of the amorphous polyester resin is 10% by mole or more and 50% by mole or less.

(((10))) The electrostatic charge image developing toner according to (((8))) or (((9))),
wherein an acid value of the amorphous polyester resin is 5 mgKOH/g or more and 20 mgKOH/g or less.
(((11))) (((10))), The electrostatic charge image developing toner according to any one of (((8))) to
wherein, in a case where a glass transition temperature of the amorphous polyester resin, actually measured with a differential scanning calorimeter, is defined as Tg(ap)°C,

$$40 \leq Tg(ap) - Tg(C1) \leq 90.$$

(((12))) (((11))), The electrostatic charge image developing toner according to any one of (((1))) to
wherein, in a case where an SP value calculated by Fedors method of the binder resin is defined as SP(ap), and an SP value calculated by Fedors method from a monomer composition that is obtained by the surface analysis of the resin particles is defined as SP(sa),

$$|SP(ap) - SP(sa)| \leq 0.4.$$

(((13))) (((12))), The electrostatic charge image developing toner according to any one of (((1))) to
wherein an average equivalent circle diameter of a domain formed by the resin particles is 50 nm or more and 300 nm or less.
(((14))) (((13))), The electrostatic charge image developing toner according to any one of (((1))) to
wherein an average shape factor SF-1 of a domain formed by the resin particles is 130 or less.
(((15))) The electrostatic charge image developing toner according to (((2))),
wherein the resin particles are crosslinked particles.
(((16))) The electrostatic charge image developing toner according to (((2))) or (((15))),

wherein the amorphous resin contains an amorphous polyester resin,
in a case where a glass transition temperature of the amorphous polyester resin, actually measured with a differential scanning calorimeter, is defined as Tg(ap), and a glass transition temperature obtained by Fox equation from a ratio of constituent monomers in the entire resin particles is defined as Tg(C1)°C,

$$40 \leq Tg(ap) - Tg(C1) \leq 90.$$

(((17))) The electrostatic charge image developing toner according to any one of (((2))), (((15))), or (((16))),
wherein an average equivalent circle diameter of a domain formed by the resin particles is 50 nm or more and 300 nm or less.
(((18))) An electrostatic charge image developer comprising: the electrostatic charge image developing toner according to any one of (((1))) to (((17))).
(((19))) A toner cartridge comprising: a container that contains the electrostatic charge image developing toner according to any one of (((1))) to (((17))), wherein the toner cartridge is detachable from an image forming apparatus.
(((20))) According to another aspect of the present disclosure, there is provided an image forming apparatus including an image holder,

a charging unit that charges a surface of the image holder;
an electrostatic charge image forming unit that forms an electrostatic charge image on the charged surface of the image holder,
a developing unit that contains the electrostatic charge image developer according to (((18))) and develops the electrostatic charge image formed on the surface of the image holder as a toner image by using the electrostatic charge image developer;
a transfer unit that transfers the toner image formed on the surface of the image holder to a surface of a recording medium, and

a fixing unit that fixes the toner image transferred to the surface of the recording medium.

According to (((1))) of the present invention, in the electrostatic charge image developing toner to which the crystalline resin and the styrene-(meth)acrylate-based resin particles are added, in a case where a glass transition temperature obtained by Fox equation from a ratio of constituent monomers in the entire resin particles is defined as Tg(C1)°C, and a glass transition temperature obtained by Fox equation using a ratio of constituent monomers, calculated from a surface analysis of the resin particles, is defined as Tg(C2)°C, it is possible to achieve both fixability in a halftone portion and post-processing machine contamination prevention in a wide temperature range, as compared to a case where Tg(C2) is equal to or higher than Tg(C1).

According to (((2))) of the present invention, in a case where a proportion of units derived from a (meth)acrylate monomer in the resin particles is defined as Wa(B)% by mole, and a proportion of units derived from a (meth)acrylate monomer, by a surface analysis of the resin particles, is defined as Wa(S)% by mole, it is possible to provide an electrostatic charge image developing toner that achieves both fixability in a halftone portion and post-processing machine contamination prevention in a wide temperature range, as compared to a case where (Wa(S) - Wa(B)) is less than 2 or more than 20.

According to (((3))) of the present invention, it is possible to provide an electrostatic charge image developing toner that prevents post-processing machine contamination in a wide temperature range, as compared to a case where the glass transition temperature Tg(E)°C of the resin particles, actually measured with a differential scanning calorimeter, is lower than 0°C or higher than 30°C.

According to (((4))) of the present invention, it is possible to provide an electrostatic charge image developing toner in which the resin particles are dispersed satisfactorily in an image even after fixing and the post-processing machine contamination is prevented, as compared to a case where the resin particles are not the crosslinked particles.

According to (((5))) of the present invention, it is possible to provide an electrostatic charge image developing toner in which deformation of the toner during fixing is within a moderate range and good fixability is obtained especially in the halftone portion, as compared to a case where the proportion of the crystalline resin in the binder resin is less than 15% by mass or more than 40% by mass.

According to (((6))) of the present invention, it is possible to provide an electrostatic charge image developing toner that achieves both fixability in a halftone portion and post-processing machine contamination prevention in a wide temperature range, as compared to a case where the electrostatic charge image developing toner contains the resin particles in an amount of less than 2% by mass or more than 20% by mass.

According to (((7))) of the present invention, it is possible to provide an electrostatic charge image developing toner that is appropriately deformed during fixing and may obtain low-temperature fixability, as compared to a case where the ratio w1/w2 of the content w1 of the resin particles in the toner to the content w2 of the crystalline resin in the toner is less than 0.2 or more than 2.0.

According to (((8))) of the present invention, it is possible to provide an electrostatic charge image developing toner in which affinity between the binder resin and the resin particles is ensured, as compared to a case where the amorphous resin does not include an amorphous polyester resin or a case where the crystalline resin does not include a crystalline polyester resin.

According to (((9))) of the present invention, it is possible to provide an electrostatic charge image developing toner in which affinity between the binder resin and the resin particles is ensured, as compared to a case where the proportion of the unit derived from isophthalic acid in units derived from an acid component monomer of the amorphous polyester resin is less than 10% by mole or more than 50% by mole.

According to (((10))) of the present invention, it is possible to provide an electrostatic charge image developing toner in which affinity between the binder resin and the resin particles is ensured, as compared to a case where the acid value of the amorphous polyester resin is less than 5 mgKOH/g or more than 20 mgKOH/g.

According to (((11))) of the present invention, in a case where a glass transition temperature of the amorphous polyester resin, actually measured with a differential scanning calorimeter, is defined as Tg(ap) and a glass transition temperature obtained by Fox equation from a ratio of constituent monomers in the entire resin particles is defined as Tg(C1)°C, it is possible to provide an electrostatic charge image developing toner in which affinity between the binder resin and the resin particles is ensured, as compared to a case where (Tg(ap) - Tg(C1)) is less than 40 or more than 90.

According to (((12))) of the present invention, in a case where an SP value calculated by Fedors method of the binder resin is defined as SP(ap) and an SP value calculated by Fedors method from a monomer composition that is obtained by the surface analysis of the resin particles is defined as SP(sa), it is possible to provide an electrostatic charge image developing toner in which affinity between the binder resin and the resin particles is ensured, as compared to a case where |SP(ap) - SP(sa)| is more than 0.4.

According to (((13))) of the present invention, it is possible to provide an electrostatic charge image developing toner that does not hider fixing and prevents post-processing machine contamination, as compared to a case where the average equivalent circle diameter of the domain formed by the resin particles is less than 50 nm or more than 300 nm.

According to (((14))) of the present invention, it is possible to provide an electrostatic charge image developing toner that does not hider fixing and prevents post-processing machine contamination, as compared to a case where the average shape factor SF-1 of the domain formed by the resin particles is more than 130.

According to (((15))) of the present invention, it is possible to provide an electrostatic charge image developing toner in which the resin particles are dispersed satisfactorily in an image even after fixing and the post-processing machine contamination is prevented, as compared to a case where the resin particles are not the crosslinked particles.

According to (((16))) of the present invention, in a case where the amorphous resin includes an amorphous polyester resin, and a glass transition temperature of the amorphous polyester resin, actually measured with a differential scanning calorimeter, is defined as Tg(ap) and a glass transition temperature obtained by Fox equation from a ratio of constituent monomers in the entire resin particles is defined as Tg(C1)°C, it is possible to provide an electrostatic charge image developing toner in which affinity between the binder resin and the resin particles is ensured, as compared to a case where (Tg(ap) - Tg(C1)) is less than 40 or more than 90.

According to (((17))) of the present invention, it is possible to provide an electrostatic charge image developing toner that does not hider fixing and prevents post-processing machine contamination, as compared to a case where the average equivalent circle diameter of the domain formed by the resin particles is less than 50 nm or more than 300 nm.

According to (((18))), (((19))), or (((20))) of the present invention, in a case where a glass transition temperature obtained by Fox equation from a ratio of constituent monomers in the entire resin particles is defined as Tg(C1)°C, and a glass transition temperature obtained by Fox equation using a ratio of constituent monomers, calculated from a surface analysis of the resin particles, is defined as Tg(C2)°C, it is possible to provide an electrostatic charge image developer, a toner cartridge, or an image forming apparatus that achieves both fixability in a halftone portion and post-processing machine contamination prevention in a wide temperature range, as compared to a case where Tg(C2) is equal to or higher than Tg(C1).

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

Brief Description of the Reference Symbols

1Y, 1M, 1C, 1K: photoreceptor (an example of image holder)

2Y, 2M, 2C, 2K: charging roll (an example of charging unit)

3: exposure device (an example of electrostatic charge image forming unit)

3Y, 3M, 3C, 3K: laser beam

4Y, 4M, 4C, 4K: developing device (an example of developing unit)

5Y, 5M, 5C, 5K: primary transfer roll (an example of primary transfer unit)

6Y, 6M, 6C, 6K: photoreceptor cleaning device (an example of image holder cleaning unit)

8Y, 8M, 8C, 8K: toner cartridge

10Y, 10M, 10C, 10K: image forming unit

20: intermediate transfer belt (an example of intermediate transfer member)

22: driving roll

24: support roll

26: secondary transfer roll (an example of secondary transfer unit)

28: fixing device (an example of fixing unit)

30: intermediate transfer belt cleaning device (an example of intermediate transfer member cleaning unit)

107: photoreceptor (an example of image holder)

108: charging roll (an example of charging unit)

109: exposure device (an example of electrostatic charge image forming unit)

111: developing device (an example of developing unit)

112: transfer device (an example of transfer unit)

113: photoreceptor cleaning device (an example of image holder cleaning unit)

115: fixing device (an example of fixing unit)

116: mounting rail

117: housing

118: opening portion for exposure
200: process cartridge
300: recording paper (an example of recording medium)
P: recording paper (an example of recording medium)

**Claims**

1. An electrostatic charge image developing toner comprising:

   a binder resin; and
   resin particles,
   wherein the binder resin includes an amorphous resin and a crystalline resin,
   the resin particles contain a styrene-(meth)acrylate-based copolymer,
   in a case where a glass transition temperature obtained by Fox equation from a ratio of constituent monomers in the entire resin particles is defined as Tg(C1)°C and a glass transition temperature actually measured with a differential scanning calorimeter is defined as Tg(E)°C,

   $$5.0 \leq Tg(E) - Tg(C1) \leq 20.0,$$

   and
   in a case where a glass transition temperature obtained by Fox equation using a ratio of constituent monomers, calculated from a surface analysis of the resin particles, is defined as Tg(C2)°C,

   $$Tg(C1) > Tg(C2).$$

2. An electrostatic charge image developing toner comprising:

   a binder resin; and
   resin particles,
   wherein the binder resin includes an amorphous resin and a crystalline resin,
   the resin particles contain a styrene-(meth)acrylate-based copolymer, and
   in a case where a proportion of units derived from a (meth)acrylate monomer in the resin particles is defined as Wa(B)% by mole, and a proportion of units derived from a (meth)acrylate monomer, by a surface analysis of the resin particles, is defined as Wa(S)% by mole,
   Wa(S) is 40% by mole or more and 80% by mole or less, and

   $$2 \leq Wa(S) - Wa(B) \leq 20.$$

3. The electrostatic charge image developing toner according to claim 1 or 2, wherein Tg(E) is 0°C or higher and 30°C or lower.

4. The electrostatic charge image developing toner according to claim 1 or 3, wherein the resin particles are crosslinked particles.

5. The electrostatic charge image developing toner according to any one of claims 1 to 4,
   wherein a proportion of the crystalline resin in the binder resin is 15% by mass or more and 40% by mass or less.

6. The electrostatic charge image developing toner according to any one of claims 1 to 5,
   wherein the resin particles are contained in an amount of 2% by mass or more and 20% by mass or less.

7. The electrostatic charge image developing toner according to any one of claims 1 to 6,
   wherein a ratio w1/w2 of a content w1 of the resin particles in the toner to a content w2 of the crystalline resin in the toner is 0.2 or more and 2.0 or less.

8. The electrostatic charge image developing toner according to any one of claims 1 to 7,

    wherein the amorphous resin includes an amorphous polyester resin, and
    the crystalline resin includes a crystalline polyester resin.

9. The electrostatic charge image developing toner according to claim 8,

    wherein the amorphous polyester resin includes a unit derived from isophthalic acid, and
    a proportion of the unit derived from isophthalic acid in units derived from an acid component monomer of the
    amorphous polyester resin is 10% by mole or more and 50% by mole or less.

10. The electrostatic charge image developing toner according to claim 8 or 9,
    wherein an acid value of the amorphous polyester resin is 5 mgKOH/g or more and 20 mgKOH/g or less.

11. The electrostatic charge image developing toner according to any one of claims 8 to 10,
    wherein, in a case where a glass transition temperature of the amorphous polyester resin, actually measured with
    a differential scanning calorimeter, is defined as Tg(ap)°C,

$$40 \leq Tg(ap) - Tg(C1) \leq 90.$$

12. The electrostatic charge image developing toner according to any one of claims 1 to 11,
    wherein, in a case where an SP value calculated by Fedors method of the binder resin is defined as SP(ap), and
    an SP value calculated by Fedors method from a monomer composition that is obtained by the surface analysis of
    the resin particles is defined as SP(sa),

$$|SP(ap) - SP(sa)| \leq 0.4.$$

13. The electrostatic charge image developing toner according to any one of claims 1 to 12,
    wherein an average equivalent circle diameter of a domain formed by the resin particles is 50 nm or more and 300
    nm or less.

14. The electrostatic charge image developing toner according to any one of claims 1 to 13,
    wherein an average shape factor SF-1 of a domain formed by the resin particles is 130 or less.

15. The electrostatic charge image developing toner according to claim 2,
    wherein the resin particles are crosslinked particles.

# FIG. 1

EP 4 435 518 A2

# FIG. 2

**REFERENCES CITED IN THE DESCRIPTION**

**Patent documents cited in the description**

- JP 2011034013 A

- JP 2005091704 A

**Non-patent literature cited in the description**

- **JUNJI MUKAI.** *Polym. Eng. Sci.,* 1974, vol. 14, 147

- Practical Polymers for Engineers. **KODANSHA.** Polymer Handbook. Willey-interscience, 1981, 66